# EUROPÄISCHE PATENTSCHRIFT

(11) **EP 2 091 988 B1**
(45) Veröffentlichungstag und Bekanntmachung des Hinweises auf die Patenterteilung: **20.02.2013**
(21) Anmeldenummer: 07856914.2
(22) Anmeldetag: 19.12.2007
(51) Int. Cl.: C08G 18/28, C08G 18/62, C08G 18/77, C08G 18/80, C09D 175/04

(54) **BESCHICHTUNGSMITTEL MIT HOHER KRATZBESTÄNDIGKEIT UND WITTERUNGSSTABILITÄT**
COATING AGENTS HAVING HIGH SCRATCH RESISTANCE AND WEATHERING STABILITY
AGENTS DE REVÊTEMENT À RÉSISTANCE ÉLEVÉE AUX RAYURES ET AUX INTEMPÉRIES

(30) Priorität: 19.12.2006 DE 102006059951
(43) Veröffentlichungstag der Anmeldung: 26.08.2009
(73) Patentinhaber: BASF Coatings GmbH, 48165 Münster (DE)
(72) Erfinder: GROENEWOLT, Matthijs, 48147 Münster (DE); POPPE, Andreas, 48324 Sendenhorst (DE); KLEIN, Günter, 48165 Münster (DE); NIEMEIER, Manuela, 48317 Drensteinfurt (DE); WESTHOFF, Elke, 48565 Steinfurt (DE); STÜBBE, Wilfried, 48268 Greven (DE); HESENER, Simone, 48165 Münster (DE)
(74) Vertreter: Hüsener, Susanne
(86) Internationale Anmeldenummer: PCT/EP2007/011191
(87) Internationale Veröffentlichungsnummer: WO 2008/074490

(56) Entgegenhaltungen:
- EP-A- 0 949 308
- WO-A-00/55229
- WO-A-2004/046218
- WO-A-2004/104078
- WO-A-2005/033240
- WO-A-2007/033786
- US-A- 5 691 439
- US-A- 5 985 463

## Beschreibung

Die vorliegende Erfindung betrifft thermisch härtbare Beschichtungsmittel auf Basis aprotischer Lösemittel enthaltend Polyole und Polyisocyanate mit hydrolysierbaren Silangruppen, die zu Beschichtungen mit einer hohen Kratzfestigkeit bei gleichzeitig hohem Glanz und hoher Witterungsstabilität führen.

In der WO-A-01/98393 werden 2K-Beschichtungsmittel beschrieben, welche ein Polyol als Bindemittelkomponente sowie als Vemetzerkomponente ein Polyisocyanat, welches teilweise mit Alkoxysilylgruppen funktionalisiert ist, enthalten. Diese Beschichtungsmittel werden als Primer eingesetzt und auf die Haftung mit metallischen Untergründen, insbesondere Aluminium-Untergründe, optimiert. Auf diese Beschichtungsmittel können im Rahmen einer OEM-Serienlackierung oder einer Reparaturlackierung Basislack-Klarlack-Aufbauten aufgebracht werden. Hinsichtlich der Kratzfestigkeit und der Witterungsstabilität sind die Beschichtungsmittel gemäß WO 01/98393 nicht optimiert.

In EP-A-0 994 117 werden feuchtehärtbare Mischungen beschrieben, welche eine Polyolkomponente und eine Polyisocyanat-Komponente, die teilweise mit einem bevorzugt zu einem Aspartat umgesetzten Monoalkoxysilylalkylamin umgesetzt sein kann, enthalten. Beschichtungen aus solchen Mischungen weisen zwar eine gewisse Härte auf, sind jedoch hinsichtlich Witterungsstabilität und insbesondere hinsichtlich ihrer Kratzfestigkeit für OEM-Anwendungen nur bedingt geeignet.

US-A-2006/0217472 beschreibt Beschichtungsmittel, welche ein hydroxyfunktionelles Acrylat, eine niedermolekulare Polyol-Komponente, ein Polyisocyanat sowie eine aminofunktionelle Alkoxysilylkomponente, bevorzugt Bisalkoxysilylamin, enthalten können. Solche Beschichtungsmittel werden als Klarlack in Basislack-Klarlack-Aufbauten eingesetzt und führen zu kratzfesten Beschichtungen. Solche Beschichtungsmittel sind allerdings nur sehr bedingt lagerfähig und die resultierenden Beschichtungen weisen eine geringe Witterungsstabilität, insbesondere gegen UV-Strahlung im Feucht-Trocken-Zyklus, auf.

In WO 2006/042585 werden Klarlacke, die für die OEM-Serienlackierung geeignet sind, beschrieben, welche als Hauptbindemittelkomponente Polyisocyanate, deren Isocyanatgruppen vorzugsweise zu mehr als 90 mol-% mit Bisalkoxysilylaminen umgesetzt sind, enthalten. Solche Klarlacke weisen eine ausgezeichnete Kratzbeständigkeit bei gleichzeitig hoher Chemikalien- und Witterungsbeständigkeit auf. Allerdings besteht noch Bedarf nach weiterer Verbesserung der Witterungsstabilität, insbesondere gegen Rissbildung bei UV-Bestrahlung im Feucht-Trockenzyklus, bei Erhalt des hohen Niveaus der Kratzfestigkeit.

EP-A-1 273 640 beschreibt 2K-Beschichtungsmittel, bestehend aus einer Polyol-Komponente und einer Vernetzerkomponente, bestehend aus aliphatischen und/oder cycloaliphatischen Polyisocyanaten, wobei 0,1 bis 95 mol-% der ursprünglich freien vorhandenen Isocyanatgruppen mit Bisalkoxylsilylamin umgesetzt ist. Diese Beschichtungsmittel können für die OEM-Serienlackierung eingesetzt werden und weisen nach ihrer vollständigen Härtung eine gute Kratzbeständigkeit bei gleichzeitig guter Beständigkeit gegen Umwelteinflüsse auf. Jedoch neigen diese Beschichtungsmittel besonders stark zur Nachvemetzung, was eine - direkt nach der thermischen Endhärtung - nur unzureichende Kratzfestigkeit der Beschichtungen zur Folge hat. Ebenso wirkt sich die starke Nachvemetzung negativ auf die Witterungsstabilität aus, da eine erhöhte Gefahr von Spannungsrissen besteht.

In der deutschen Patentanmeldung DE 102007013242 sind Beschichtungsmittel beschrieben, die oberflächenaktiv modifiziert silanhaltige Verbindungen enthalten. Diese Beschichtungsmittel führen zu endgehärteten Beschichtungen, die in der oberflächennahen Beschichtungszone - aufgrund der Anreicherung der oberflächenaktiv modifizierten silanhaltigen Verbindungen vor der thermischen Härtung- eine höhere Dichte an Si-Atomen des Si-O-Si Netzwerkes aufweisen als im Bulk. Diese Anreicherung des Si-O-Si Netzwerkes an der Oberfläche weisen die erfindungsgemäßen Beschichtungen dagegen gerade nicht auf, sondern die Bereiche des Si-O-Si Netzwerkes der endgehärteten erfindungsgemäßen Beschichtung sind statistisch verteilt.

### Aufgabe und Lösung

Aufgabe der vorliegenden Erfindung war es, Beschichtungsmittel, insbesondere für die Klarlackschicht bei OEM-Serienlackierungen und bei Automobilreparaturlackierungen, zur Verfügung zu stellen, die zu einem hochgradig witterungsstabilen Netzwerk führen, wobei die unerwünschte Ausbildung von hydrolyse- und witterungslabilen Gruppierungen weitestgehend unterdrückt wird, um eine hohe Säurefestigkeit zu gewährleisten. Daneben sollen die Beschichtungsmittel zu Beschichtungen führen, welche schon direkt nach der thermischen Härtung hochgradig kratzfest sind und insbesondere einen hohen Glanzerhalt nach Kratzbelastung aufweisen. Weiterhin sollten sich die Beschichtungen und Lackierungen, speziell die Klarlackierungen, auch in Schichtdicken > 40 µm herstellen lassen, ohne dass Spannungsrisse auftreten. Dies ist eine wesentliche Voraussetzung für die Verwendung der Beschichtungen und Lackierungen, insbesondere der Klarlackierungen, in dem technologisch und ästhetisch besonders anspruchsvollen Gebiet der Automobilserienlackierung (OEM).

Insbesondere sollten Klarlackierungen mit hoher Beständigkeit, besonders gegen Rissbildung, bei Bewitterung mit UV-Strahlung im Feucht-Trockenzyklus in Kombination mit ausgezeichneter Kratzfestigkeit zur Verfügung gestellt werden.

Darüber hinaus sollen die neuen Beschichtungsmittel einfach und sehr gut reproduzierbar herstellbar sein und während der Lackapplikation keine ökologischen Probleme bereiten.

### Lösung der Aufgabe

Im Lichte der obengenannten Aufgabenstellung wurden Beschichtungsmittel auf Basis aprotischer Lösemittel gefunden, enthaltend
(a) mindestens eine hydroxylgruppenhaltige Verbindung (A),
(b) mindestens eine Verbindung (B) mit freien und/oder blockierten Isocyanatgruppen,
(c) mindestens einen Katalysator (D) für die Vernetzung von Silangruppen,
   wobei
   (i) ein oder mehrere Bestandteile des Beschichtungsmittels hydrolysierbare Silangruppen enthalten und
   (ii) das Beschichtungsmittel zu einer Beschichtung endgehärtet werden kann, die statistisch verteilte Bereiche eines Si-O-Si Netzwerkes aufweist,
dadurch gekennzeichnet, dass
I. die aus dem Beschichtungsmittel erhaltene, endgehärtete Beschichtung einen Nachvemetzungsindex (PCI) kleiner als 2 aufweist, wobei
   - der Nachvernetzungsindex (PCI) definiert ist als der Quotient aus dem Speichermodul E'(200) der endgehärteten Beschichtung, gemessen bei 200°C, zu dem Minimum des Speichermoduls E'(min) der endgehärteten Beschichtung, gemessen bei einer Temperatur oberhalb der gemessenen Glasübergangstemperatur Tg,
   - die Speichermoduli E'(200) und E'(min) sowie die Glasübergangstemperatur Tg an freien Filmen mit einer Schichtdicke von 40 µm +/-10 µm mit der Dynamisch-Mechanischen-Thermo-Analyse (=DMTA) bei einer Heizrate von 2K/min und einer Frequenz von 1 Hz gemessen worden sind und
   - die DMTA Messungen an freien Filmen mit einer Schichtdicke von 40 µm +/- 10 µm, die 20 min bei einer Objekttemperatur von 140°C gehärtet und nach der Härtung 8 Tage bei 25 °C gelagert wurden, bevor die DMTA Messungen durchgeführt wurden,
II. das Polyisocyanat (B) zumindestens teilweise eine oder mehrere, gleiche oder verschiedene Struktureinheiten der Formel (I) aufweist

   -X-Si-R"ₓG₃₋ₓ (I)

   mit
   G = identische oder unterschiedliche hydrolysierbare Gruppen, insbesondere G = Alkoxygruppe (O R'),
   X = organischer Rest, insbesondere linearer und/oder verzweigter Alkylen- oder Cycloalkylenrest mit 1 bis 20 Kohlenstoffatomen, ganz besonders bevorzugt X = Alkylenrest mit 1 bis 4 Kohlenstoffatomen,
   R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen, x = 0 bis 2, bevorzugt 0 bis 1, besonders bevorzugt x = 0,
III. der Katalysator (D) phosphorhaltig ist
   und
IV. das Beschichtungsmittel 0,1 bis 10 Gew.-%, bezogen auf die nicht flüchtigen Bestandteile des Beschichtungsmittels, Katalysator (D) enthält.

Im Hinblick auf den Stand der Technik war es überraschend und für den Fachmann nicht vorhersehbar, dass die Aufgaben, die der vorliegenden Erfindung zugrunde lagen, mit Hilfe des erfindungsgemäßen Beschichtungsmittels gelöst werden konnten.

Die erfindungsgemäßen Komponenten können besonders einfach und sehr gut reproduzierbar hergestellt werden und bereiten bei der Lackapplikation keine signifikanten toxikologischen und ökologischen Probleme.

Die erfindungsgemäßen Beschichtungsmittel liefern neue Beschichtungen und Lackierungen, speziell Klarlackierungen, die hoch kratzfest sind und im Gegensatz zu gängigen hochvernetzten kratzfesten Systemen säureresistent sind. Weiterhin lassen sich die erfindungsgemäßen Beschichtungen und Lackierungen, speziell die Klarlackierungen, auch in Schichtdicken > 40 µm herstellen, ohne dass Spannungsrisse auftreten. Deswegen können die erfindungsgemäßen Beschichtungen und Lackierungen, insbesondere die Klarlackierungen, in dem technologisch und ästhetisch besonders anspruchsvollen Gebiet der Automobilserienlackierung (OEM) eingesetzt werden. Dabei zeichnen sie sich durch eine besonders hohe Waschstraßenbeständigkeit und Kratzfestigkeit aus. Insbesondere ist die hohe Kratzfestigkeit der Beschichtungen direkt nach der Endhärtung der Beschichtungen gegeben, so dass die Beschichtungen direkt im Anschluß an die Endhärtung problemlos gehandhabt werden können. Außerdem ist die Beständigkeit der erfindungsgemäßen Beschichtungen gegen Rissbildung bei UV-Strahlung und Feucht-Trockenwechsel im CAM180-Test (nach DIN EN ISO 11341 Feb 98 und DIN EN ISO 4892-2 Nov 00) in Kombination mit einer hohen Kratzfestigkeit ausgezeichnet.

### Beschreibung der Erfindung

### Der Nachvernetzungsindex (PCI)

Um die Beschichtungen mit der geforderten hohen Kratzfestigkeit - auch bereits direkt nach der thermischen Härtung - bei gleichzeitig guter Witterungsstabilität zu erreichen, ist es erfindungswesentlich, dass die Beschichtungsmittel unter den angewandten Härtungsbedingungen möglichst vollständig aushärten, also nach der Härtung der Beschichtung nur eine geringe Nachvemetzung zeigen. Diese geringe Nachvemetzung wird durch den Nachvemetzungsindex (PCI) ausgedrückt.
Der Nachvemetzungsindex (PCI) ist definiert als der Quotient aus dem Speichermodul E'(200) der endgehärteten Beschichtung, gemessen bei 200°C, zu dem Minimum des Speichermoduls E'(min) der endgehärteten Beschichtung, gemessen bei einer Temperatur direkt oberhalb der gemessenen Glasübergangstemperatur Tg, d.h. E'(min) ist das Minimum des Speichermoduls, welches bei der DMTA-Messung auftritt, wenn die Messtemperatur größer Tg und kleiner als 200°C ist.
Unter endgehärteter Beschichtung wird eine Beschichtung verstanden, die 20 Minuten bei einer Objekttemperatur von 140°C gehärtet und nach der Härtung 8 Tage bei 25 °C gelagert wird, bevor die DMTA Messungen durchgeführt werden. Selbstverständlich können die erfindungsgemäßen Beschichtungsmittel auch unter anderen - je nach Verwendungszweck unterschiedlichen - Bedingungen gehärtet werden. Außerdem können die erfindungsgemäßen Beschichtungsmittel selbstverständlich auch weniger als 8 Tage nach der Endhärtung gelagert werden, bevor die Speichermoduli gemessen werden. Naturgemäß wird dabei im Allgemeinen der Nachvemetzungsindex bei einer kürzeren Lagerung von beispielsweise nur 1 Tag bei 25°C etwas höher liegen als bei einer Lagerung von 8 Tagen bei 25 °C. Zur Ermittlung des Nachvernetzungsindexes mittels DMTA-Messungen mit dem Ziel festzustellen, ob die jeweiligen Beschichtungsmittel erfindungsgemäß sind, ist es jedoch erforderlich, die Beschichtung unter den reproduzierbaren, genau festgelegten Bedingungen zu härten und zu lagem.

Die zur Ermittlung des Nachvemetzungsindexes erforderlichen Speichermoduli E'(200) und E'(min) sowie die Glasübergangstemperatur Tg werden mit der Dynamisch-Mechanischen-Thermo-Analyse (=DMTA) bei einer Heizrate von 2 K/min und einer Frequenz von 1 Hz gemessen.

Die Dynamisch-Mechanische Thermo-Analyse ist eine allgemein bekannte Messmethode zur Bestimmung der viskoelastischen Eigenschaften von Beschichtungen und beispielsweise beschrieben in Murayama, T., Dynamic Mechanical Analysis of Polymeric Material, Esevier, New York, 1978 und Loren W. Hill, Journal of Coatings Technology, Vol. 64, No. 808, May 1992, Seiten 31 bis 33.

Die Durchführung der Messungen kann beispielsweise mit dem Gerät DMTA V der Firma Rheometrics Scientific mit einer Frequenz von 1 Hz und einer Amplitude von 0,2% erfolgen. Die Heizrate beträgt dabei 2K pro Minute.

Die DMTA Messungen werden an freien Filmen mit einer Schichtdicke von 40 µm +/- 10 µm durchgeführt. Hierzu wird das erfindungsgemäße Beschichtungsmittel auf Substraten, auf denen die erhaltene Beschichtung nicht haftet, appliziert. Als Beispiele für geeignete Substrate seien Glas, Teflon, Polyethylenterephthalat und Polypropylen genannt. Die so erhaltene Beschichtung wird 20 Minuten bei einer Objekttemperatur von 140°C gehärtet und nach der Härtung 8 Tage bei 25 °C gelagert, bevor die DMTA Messungen durchgeführt werden.

Ferner zeichnen sich die erfindungsgemäßen Beschichtungsmittel dadurch aus, dass sie zu einer Beschichtung endgehärtet werden können, die statistisch verteilte Bereiche des Si-O-Si Netzwerkes aufweist. Dies bedeutet, dass es zu keiner gezielten Anreicherung oder Abreicherung des Si-O-Si Netzwerkes in bestimmten Bereichen der Beschichtung, also auch nicht zu der in der deutschen Patentanmeldung DE 102007013242 beschriebenen Anreicherung in der oberflächennahen Beschichtungszone kommt.

Es ist erfindungswesentlich, dass die aus dem Beschichtungsmittel erhaltene, endgehärtete Beschichtung einen Nachvemetzungsindex (PCI) kleiner als 2, bevorzugt kleiner gleich 1,8 besonders bevorzugt kleiner gleich 1,7 und ganz besonders bevorzugt kleiner gleich 1,5 aufweist.

Dabei ist zunächst festzustellen, dass die Nachvemetzung im Allgemeinen um so geringer und damit der Nachvemetzungsindex (PCI) um so kleiner ist, je geringer der Anteil der Silanvemetzung an der Vernetzung insgesamt ist. Gleichzeitig nimmt aber mit abnehmendem Anteil an Silanvemetzung auch die Kratzfestigkeit ab, so dass zur Erreichung der gewünschten sehr hohen Kratzfestigkeit ein relativ hoher Anteil an Silanvemetzung erwünscht ist.

Der erfindungsgemäß einzustellende niedrige Nachvemetzungsindex (PCI) von kleiner 2, bevorzugt kleiner gleich 1,8, besonders bevorzugt kleiner gleich 1,7 und ganz besonders bevorzugt kleiner gleich 1,5 läßt sich durch eine Vielzahl von Maßnahmen, die im Folgenden näher erläutert werden, einstellen. Somit können erfindungsgemäß Beschichtungsmittel mit den für die Einstellung einer sehr hohen Kratzfestigkeit erforderlichen hohen Anteilen an Silanvemetzung bereit gestellt werden, die aufgrund des geringen Nachvemetzungsgrades (gemessen über den Nachvemetzungsindex) nicht die üblicherweise mit hohen Anteilen an Silanvemetzung verbundenen Nachteile aufweisen. Insbesondere gelingt es durch die Einstellung des geringen Nachvemetzungsindexes Beschichtungsmittel zur Verfügung zu stellen, die eine hohe Kratzfestigkeit direkt im Anschluß an die thermische Endhärtung der Beschichtung aufweisen und gleichzeitig eine gute Witterungsbeständigkeit aufweisen. Außerdem zeichnen sich die erfindungsgemäßen Beschichtungsmittel gleichzeitig durch sehr gute Beständigkeiten der erfindungsgemäßen Beschichtungen gegen Rissbildung bei UV-Strahlung und Feucht-Trockenwechsel im CAM180-Test (nach DIN EN ISO 11341 Feb 98 und DIN EN ISO 4892-2 Nov 00), einen hohen Glanz und einen hohen Glanzerhalt nach Bewitterung aus.

### Der Katalysator (D) für die Vernetzung der Silangruppen

Eine bevorzugte Maßnahme zur Steuerung des Nachvernetzungsindexes (PCI) stellt der Katalysator (D) für die Vernetzung der Silangruppen dar.

Zur Einstellung eines niedrigen Nachvernetzungsindexes werden als Katalysator (D) phosphorhaltige, insbesondere phosphor- und stickstoffhaltige Katalysatoren eingesetzt. Dabei können auch Mischungen aus zwei oder mehreren verschiedenen Katalysatoren (D) eingesetzt werden.

Beispiele für geeignete phosphorhaltige Katalysatoren (D) sind substituierte Phosphonsäurediester und Diphosphonsäurediester, vorzugsweise aus der Gruppe, bestehend aus acyclischen Phosphonsäurediestern, cyclischen Phosphonsäurediestern, acyclischen Diphosphonsäurediestem und cyclischen Diphosphonsäurediestem. Derartige Katalysatoren sind beispielsweise in der deutschen Patentanmeldung DE-A-102005045228 beschrieben.

Insbesondere werden aber als Katalysator substituierte Phosphorsäuremonoester und Phosphorsäurediester, vorzugsweise aus der Gruppe, bestehend aus acyclischen Phosphorsäurediestem und cyclischen Phosphorsäurediestem, besonders bevorzugt Aminaddukte der Phosphorsäure-mono- und -di-ester, eingesetzt.

Dabei werden die acyclischen Phosphorsäurediester (D) insbesondere aus der Gruppe, bestehend aus acyclischen Phosphorsäurediestem (D) der allgemeinen Formel (IV): 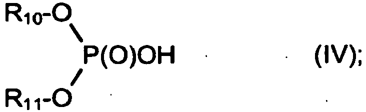 ausgewählt, wobei die Reste R₁₀ und R₁₁ aus der Gruppe, bestehend aus:
- substituiertem und unsubstituiertem Alkyl- mit 1 bis 20, vorzugsweise 2 bis 16 und insbesondere 2 bis 10 Kohlenstoffatomen, Cycloalkyl- mit 3 bis 20, vorzugsweise 3 bis 16 und insbesondere 3 bis 10 Kohlenstoffatomen und Aryl- mit 5 bis 20, vorzugsweise 6 bis 14 und insbesondere 6 bis 10 Kohlenstoffatomen,
- substituiertem und unsubstituiertem Alkylaryl-, Arylalkyl-, Alkylcycloalkyl-, Cycloalkylalkyl-, Arylcycloalkyl-, Cycloalkylaryl-, Alkylcycloalkylaryl-, Alkylarylcycloalkyl-, Arylcycloalkylalkyl-, Arylalkylcycloalkyl-, Cycloalkylalkylaryl-und Cycloalkylarylalkyl-, wobei die hierin enthalten Alkyl-, Cycloalkyl- und Arylgruppen jeweils die vorstehend aufgeführte Anzahl von Kohlenstoffatomen enthalten und
- substituiertem und unsubstituiertem Rest- der vorstehend aufgeführten Art, enthaltend mindestens ein, insbesondere ein, Heteroatom, ausgewählt aus der Gruppe bestehend aus Sauerstoffatom, Schwefelatom, Stickstoffatom, Phosphoratom und Siliziumatom, insbesondere Sauerstoffatom, Schwefelatom und Stickstoffatom
ausgewählt werden und zusätzlich auch Wasserstoff darstellen können (Teilversterung).

Ganz besonders bevorzugt werden als Katalysator (D) die entsprechenden aminblockierten Phosphorsäureester, und hier insbesondere aminblockierte Phosphorsäureethylhexylester und aminblockierte Phosphorsäurephenylester, ganz besonders bevorzugt amin-blockierter Phosphorsäure-bis(2-ethylhexyl)ester eingesetzt.

Als Beispiele für Amine, mit welchem die Phosphorsäureester blockiert werden, sind insbesondere tertiäre Amine, beispielsweise Triethylamin, zu nennen. Besonders bevorzugt werden zur Blockierung der Phosphorsäureester tertiäre Amine eingesetzt, die eine gute Wirksamkeit des Katalysators bei den Härtungsbedingungen von 140°C gewährleisten.

Bestimmte, mit Amin blockierte Phosphorsäurekatalysatoren sind auch kommerziell erhältlich (z.B. Nacure-Typen der Fa. King Industries). Beispielsweise sei der unter der Bezeichnung Nacure 4167 von der Firma King Industries als besonders geeigneter Katalysator auf der Basis eines Amin - blockierten Phosphorsäureteilesters genannt.

Die Katalaysatoren werden in Anteilen von 0,1 bis 10 Gew.-%, bezogen auf die nicht flüchtigen Bestandteile des erfindungsgemäßen Beschichtungsmittels, eingesetzt. Dabei hat auch die eingesetzte Menge des Katalysators einen gewissen Einfluß auf den Nachvemetzungsindex, da eine geringere Wirksamkeit des Katalysators durch entsprechend höhere Einsatzmengen teilweise kompensiert werden kann.

### Die Struktureinheiten mit hydrolysierbaren Silangruppen

Es ist erfindungswesentlich, dass ein oder mehrere Bestandteile des Beschichtungsmittels hydrolysierbare Silangruppen enthalten. Diese hydrolysierbaren Silangruppen führen zum Aufbau des Si-O-Si Netzwerkes, welches in der endgehärteten Beschichtung statistisch verteilt ist.

Hier kommen Beschichtungsmittel in Betracht, bei denen das Polyisocyanat (B) zumindestens teilweise eine oder mehrere, gleiche oder verschiedene Struktureinheiten der Formel (I) aufweist

-X-Si-R"ₓG₃₋ₓ (I)

mit
G = identische oder unterschiedliche hydrolysierbare Gruppen,
X = organischer Rest, insbesondere linearer und/oder verzweigter Alkylen- oder Cycloalkylenrest mit 1 bis 20 Kohlenstoffatomen, ganz besonders bevorzugt X = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
x = 0 bis 2, bevorzugt 0 bis 1, besonders bevorzugt x = 0.

Dabei hat auch die Struktur dieser Silanreste einen Einfluß auf die Reaktivität und damit auch auf die möglichst weitgehende Umsetzung während des Härtens der Beschichtung, also auf die Einstellung eines möglichst niedrigen Nachvemetzungsindexes (PCI).

Hinsichtlich der Verträglichkeit und der Reaktivität der Silane werden Silane mit 3 hydrolysierbaren Gruppen bevorzugt eingesetzt, d.h. x = 0.

Die hydrolysierbaren Gruppen G können ausgewählt werden aus der Gruppe der Halogene, insbesondere Chlor und Brom, aus der Gruppe der Alkoxygruppen, aus der Gruppe der Alkylcarbonylgruppen und aus der Gruppe der Acyloxygruppen. Besonders bevorzugt sind Alkoxygruppen (OR').

Die jeweiligen bevorzugten Alkoxyreste (OR') können gleich oder verschieden sein, entscheidend für den Aufbau der Reste ist jedoch, inwiefern diese die Reaktivität der hydrolysierbaren Silangruppen beeinflussen. Bevorzugt ist R' ein Alkylrest, insbesondere mit 1 bis 6 C-Atomen. Besonders bevorzugt sind Reste R', die die Reaktivität der Silangruppen erhöhen, d.h. gute Abgangsgruppen darstellen. Insofern ist ein Methoxy - Rest gegenüber einem Ethoxy - Rest und dieser wiederum gegenüber einem Propoxyrest bevorzugt. Besonders bevorzugt ist daher R' = Ethyl und/oder Methyl, insbesondere Methyl.

Des Weiteren kann die Reaktivität von organofunktionellen Silanen auch durch die Länge der Spacer X zwischen Silan - Funktionalität und organischer funktioneller Gruppe, die zur Reaktion mit dem modifizierenden Bestandteil dient, erheblich beeinflusst werden. Beispielhaft dafür seien die "alpha" - Silane genannt, die bei der Firma Wacker erhältlich sind, und bei denen eine Methylengruppe anstelle der bei "gamma"-Silane vorhandenen Propylengruppe zwischen Si-Atom und funktioneller Gruppe ist. Zur Verdeutlichung wird angeführt, dass Methacryloxymethyltrimethoxysilan ("alpha" - Silan, z.B. Handelsprodukt GENIOSIL® XL 33 der Firma Wacker) bevorzugt gegenüber Methacryloxypropyltrimethoxysilan ("gamma" - Silan, z.B. Handelsprodukt GENIOSIL® GF 31 der Firma Wacker) eingesetzt wird, um die hydolysierbaren Silangruppen in das Beschichtungsmittel einzuführen.

Ganz allgemein sind Spacer, die die Reaktivität der Silane erhöhen, bevorzugt gegenüber Spacern, die die Reaktivität der Silane herabsetzen.

Daneben hat auch die Funktionalität der Silane einen Einfluß auf den Nachvernetzungsindex. Unter Funktionalität wird dabei die Anzahl der Reste der Formel (I) pro Molekül verstanden. Unter einem monofunktionellen Silan werden daher Silane verstanden, die pro Silan-Molekül jeweils einen Rest der Formel (I) in den zu modifizierenden Bestandteil einführen. Unter einem difunktionellen Silan werden dabei Silane verstanden, die pro Silan-Molekül jeweils zwei Reste der Formel (I) in den Bestandteil einführen.

Besonders bevorzugt sind erfindungsgemäß Beschichtungsmittel, bei denen das Polyisocyanat (B) mit einer Mischung aus einem mono- und einem di-funktionellen Silan modifiziert worden sind. Als difunktionelle Silane werden dabei insbesondere die weiter unten beschriebenen aminofunktionellen Disilane der Formel (IIa) und als monofunktionelle Silane die weiter unten beschriebenen Silane der Formel (IIIa) eingesetzt.

Im Allgemeinen nimmt nun bei gleichem Silanisierungehalt mit steigendem Anteil an monofunktionellem Silan der Nachvernetzungsindex (PCI) ab, gleichzeitig nimmt aber auch die Kratzfestigkeit ab. Im Allgemeinen nimmt außerdem mit steigendem Anteil an difunktionellem Silan der Nachvernetzungsindex (PCI) zu, gleichzeitig nimmt aber auch die Kratzfestigkeit zu. Bei hohen Anteilen an difunktionellem Silan sind daher entsprechend andere Maßnahmen zur Erniedrigung des Nachvemetzungsindexes zu ergreifen, um die erfindungsgemäßen Beschichtungsmittel zur Verfügung zu stellen. Beispielsweise kann der Silanisierungsgrad insgesamt erniedrigt werden, d.h. bei der unten beschriebenen Modifizierung der Polyisocyanatkomponente (B) mit einem (Bis-silyl)amin der Formel (IIa) kann der Anteil der insgesamt mit einem Silan umgesetzten Isocyanatgruppen entsprechend niedrig gewählt werden. Außerdem wird mit steigendem Silanisierungsgrad (also steigendem Gesamtanteil der mit den Verbindungen (IIa) und (IIIa) umgesetzten 1-socyanatgruppen) und steigendem Anteil an difunktionellen Silan (IIa) der Einfluß des Katalysators auf den Nachvernetzungsindex immer größer, so dass dann insbesondere aminblockierte Phosphorsäurebasierende Katalysatoren zum Einsatz kommen.

Schließlich können auch nicht funktionelle Substituenten am organofunktionellen Silan, das zur Einführung der Struktureinheiten (I) bzw. (II) bzw. (III) eingesetzt wird, die Reaktivität der hydrolysierbaren Silangruppe beeinflussen. Beispielhaft sei dies erläutert am Beispiel von voluminösen, sperrigen Substituenten an der Aminfunktion, die die Reaktivität von Aminfunktionellen Silanen reduzieren können. Vor diesem Hintergrund ist N-(n-butyl)-3-aminopropyltrimethoxysilan bevorzugt vor N-Cyclohexyl-3-aminopropyltrimethoxysilan zur Einführung der Struktureinheiten (III).

Ganz allgemein sind die Reste, die die Reaktivität der Silane erhöhen, bevorzugt gegenüber Resten, die die Reaktivität der Silane herabsetzen.

Die Struktureinheiten der Formel (I) können auf unterschiedliche Arten in das Polyisocyanat (B) eingeführt werden. Gemeinsam ist den verschiedenen Arten jedoch, dass die Einführung der Struktureinheiten über eine Reaktion der funktionellen Gruppen der zu modifizierenden Bestandteile mit komplementären funktionellen Gruppen des Silans erfolgt. Beispielhaft seien daher im Folgenden verschiedenen Möglichkeiten zur Einführung der Struktureinheiten (I) in die Isocyanatgruppen aufweisende Verbindung (B) aufgeführt.

Zum Einsatz, insbesondere im Rahmen von Michael - Additionen, kommen beispielsweise primäre Aminosilane, wie 3 - Aminopropyltriethoxysilan (erhältlich z.B. unter dem Markennamen Geniosil® GF 93 von der Fa. Wacker Chemie), 3 - Aminopropyltrimethoxysilan (erhältlich z.B. unter dem Markennamen Geniosil® GF 96 von der Fa. Wacker Chemie), N-(2-Aminoethyl)-3-aminopropyltrimethoxysilan (erhältlich z.B. unter dem Markennamen Geniosil® GF 9 sowie Geniosil® GF 91 von der Fa. Wacker Chemie), N-(2-Aminoethyl)-3-aminopropylmethyldimethoxy-silan (erhältlich z.B. unter dem Markennamen Geniosil® GF 95 von der Fa. Wacker Chemie) u.ä.

Zum Einsatz, insbesondere im Rahmen von Additionen an Isocyanat - funktionelle Verbindungen, kommen beispielsweise sekundäre Aminosilane, wie beispielsweise Bis-(2-trimethoxysilylethyl)amin, Bis-(2-triethoxysilylethyl)amin, Bis (3-triethoxysilylpropyl)amin (erhältlich unter dem Handelsnamen Dynasylan® 1122 bei der Firma Degussa), Bis (3-trimethoxysilylpropyl)amin (erhältlich unter dem Handelsnamen Dynasylan® 1124 bei der Firma Degussa), Bis-(4-triethoxysilylbutyl)amin, N-(n-butyl)-3-aminopropyltrimethoxysilan (erhältlich unter dem Handelsnamen Dynasylan® 1189 bei der Firma Degussa), N-(n-butyl)-3-aminopropyltriethoxysilan, N-Cyclohexyl-3-aminopropyltrimethoxysilan (erhältlich unter dem Markennamen Geniosil® GF 92 von der Fa. Wacker Chemie), N-Cyclohexyl-3-aminopropyltriethoxysilan, N-Cyclohexylaminomethylmethyldiethoxysilan (erhältlich von der Fa. Wacker Chemie unter dem Handelsnamen Geniosil® XL 924), N-Cyclohexylaminomethyltriethoxysilan (erhältlich von der Fa. Wacker Chemie unter dem Handelsnamen Geniosil® XL 926), N-Phenylaminomethyltrimethoxysilan (erhältlich von der Fa. Wacker Chemie unter dem Handelsnamen Geniosil® XL 973) u.ä..

Epoxy - funktionelle Silane können insbesondere zur Addition an Carbonsäure- oder Anhydrid- funktionelle Verbindungen eingesetzt werden. Beispiele für geeignete Epoxy - funktionelle Silane sind 3-Glycidyloxypropyltrimethoxysilan (erhältlich bei der Fa. Degussa unter dem Handelsnamen Dynasylan® GLYMO), 3-Glycidyloxypropyltriethoxysilan (erhältlich bei der Fa. Degussa unter dem Handelsnamen Dynasylan® GLYEO) u.ä..

Anhydrid - funktionelle Silane können insbesondere zur Addition an Epoxy - funktionelle Verbindungen eingesetzt werden. Beispielhaft für ein Silan mit Anhydrid - Funktionalität sei 3-(Triethoxysilyl)propylbem-steinsäureanhydrid (erhältlich von der Fa. Wacker Chemie unter dem Handelsnamen Geniosil® GF 20) genannt.

Derartige Silane können im Rahmen von Michael Reaktionen oder auch im Rahmen von metalikatalysierten Reaktionen eingesetzt werden. Beispielhaft werden 3-Methacryloxypropyltrimethoxysilan (erhältlich z. B. bei der Fa. Degussa unter dem Handelsnamen Dynasilan® MEMO, oder bei der Fa. Wacker Chemie unter dem Handelsnamen Geniosil® GF 31), 3-Methacryloxypropyltriethoxysilan, Vinyltrimethoxysilan (erhältlich u. a. bei der Fa. Wacker Chemie unter dem Handelsnamen Geniosil® XL 10), Vinyldimethoxymethylsilan (erhältlich u. a. bei der Fa. Wacker Chemie unter dem Handelsnamen Geniosil® XL 12), Vinyltriethoxysilan (erhältlich u. a. bei der Fa. Wacker Chemie unter dem Handelsnamen Geniosil® GF 56), (Methacryloxymethyl)methyldimethoxysilan (erhältlich u. a. bei der Fa. Wacker Chemie unter dem Handelsnamen Geniosilo® XL 32), Methacryloxymethyltrimethoxysilan (erhältlich u. a. bei der Fa. Wacker Chemie unter dem Handelsnamen Geniosil® XL 33), (Methacryloxymethyl)methyldiethoxysilan (erhältlich u. a. bei der Fa. Wacker Chemie unter dem Handelsnamen Geniosil® XL 34), Methacryloxymethyltriethoxysilan (erhältlich u. a. bei der Fa. Wacker Chemie unter dem Handelsnamen Geniosil® XL 36) genannt.

Silane mit Isocyanatofunktion oder Carbamatfunktion kommen insbesondere zum Einsatz im Rahmen von Reaktionen mit Hydroxy-funktionellen Verbindungen. Beispiele für Silane mit Isocyanatofunktion sind beispielsweise in der WO07/073857 beschrieben.

Geeignete Isocyanatoalkyltrialkoxysilane sind beispielsweise Isocyanatopropyltrimethoxysilan, Isocyanatopropylmethyldimethoxysilan, Isocyanatopropylmethyldiethoxysilan, Isocyanatopropyltriethoxysilan, Isocyanatopropyltriisopropoxysilan, Isocyanatopropylmethydiisopropoxysilan, Isocyanatoneohexyltrimethoxysilan, Isocyanatoneohexyldimethoxysilan, Isocyanatoneohexyldiethoxysilan, Isocyanatoneohexyltriethoxysilan, Isocyanatoneohexyltriisopropoxysilan, Isocyanatoneohexyldiisopropoxysilan, Isocyanatoisoamyltrimethoxysilan, Isocyanatoisoamylmethyldimethoxysilan, Isocyanatoisoamylmethyldiethoxysilan, Isocyanatoisoamyltriethoxysilan, Isocyanatoisoamyltriisopropoxysilan und Isocyanatoisoamylmethyldiisopropoxysilan. Viele Isocyanatoalkyltri- und -di-alkoxysilane sind im Handel beispielsweise unter der Bezeichnung SILQUEST® der Firma OSi Specialties, Inc., einem Unternehmen der Witco Corporation, erhältlich.

Das verwendete Isocyanatopropylalkoxysilan hat bevorzugt einen hohen Reinheitsgrad, insbesondere von mindestens 95%, und ist bevorzugt frei von Additiven, wie Umesterungskatalysatoren, die zu unerwünschten Nebenreaktionen führen können.

Zum Einsatz kommen insbesondere (Isocyanatomethyl)methyldi-methoxysilan (erhältlich bei der Fa. Wacker - Chemie unter dem Markennamen Geniosil® XL 42), 3-Isocyanatopropyltrimethoxysilan (erhältlich bei der Fa. Wacker - Chemie unter dem Markennamen Geniosi®I XL 40) und N-Dimethoxy(methyl)silylmethyl-O-methyl-carbamat (erhältlich bei der Fa. Wacker - Chemie unter dem Markennamen Geniosil® XL 65).

Erfindungsgemäß insbesondere bevorzugt sind Beschichtungsmittel, enthaltend mindestens eine hydroxylgruppenhaltige Verbindung (A) sowie mindestens eine isocyanatgruppenhaltige Verbindung (B), die dadurch gekennzeichnet sind, dass das Polyisocyanat (B) zwischen

2,5 und 97,5 mol-%, bezogen auf die Gesamtheit der Struktureinheiten (II) und (III), mindestens einer Struktureinheit der Formel (II)

-N(X-SiR"x(OR')3-x)n(X'-SiR"y(OR')3-y)m (II)

wobei
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/oder Methyl
X,X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
n = 0 bis 2, m = 0 bis 2, m+n = 2 , sowie x,y = 0 bis 2,
und
zwischen 2,5 und 97,5 mol-%, bezogen auf die Gesamtheit der Struktureinheiten (II) und (III), mindestens einer Struktureinheit der Formel (III)

-Z-(X-SiR"x(OR')3-x) (III),

wobei
Z = -NH-, -NR-,-O-, mit
R = Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
x = 0 bis 2,
X, R', Rⁿ die bei Formel (II) angegebene Bedeutung haben
aufweist.

Ganz besonders bevorzugt sind Beschichtungsmittel, bei denen das Polyisocyanat (B) zwischen 5 und 95 mol-%, insbesondere zwischen 10 und 90 mol-%, besonders bevorzugt zwischen 20 und 80 mol-%, und ganz besonders zwischen 30 und 70 mol-%, jeweils bezogen auf die Gesamtheit der Struktureinheiten (II) und (III), mindestens einer Struktureinheit der Formel (II) und zwischen 5 und 95 mol-%, insbesondere zwischen 10 und 90 mol%, besonders bevorzugt zwischen 20 und 80 mol-%, und ganz besonders zwischen 30 und 70 mol-%, jeweils bezogen auf die Gesamtheit der Struktureinheiten (II) und (III), mindestens einer Struktureinheit der Formel (III), aufweist.

### Die hydroxylgruppenhaltige Verbindung (A)

Als hydroxylgruppenhaltige Verbindung (A) werden vorzugsweise sowohl niedermolekulare Polyole als auch oligo- und/oder polymere Polyole eingesetzt.

Als niedermolekulare Polyole werden beispielsweise Diole, wie bevorzugt Ethylenglykol, Neopentylglykol, 1,2,-Propandiol, 2,2,-Dimethyl-1,3-Propandiol,1,4-Butandiol, 1,3-Butandiol, 1,5,-Pentandiol, 2,2,4-Trimethyl-1,3-pentandiol, 1,6-Hexandiol, 1,4-Cyclohexandimethanol und 1,2-Cyclohexandimethanol, sowie Polyole, wie bevorzugt Trimethylolethan, Trimethylolpropan, Trimethylolhexan, 1,2,4-Butantriol, Pentaerytritol sowie Dipentaerytritol, eingesetzt.
Bevorzugt werden solche niedermolekularen Polyole in untergeordneten Anteilen der oligo- und/oder polymeren Polyolkomponente (A) beigemischt.

Die bevorzugten oligo- und/oder polymeren Polyole (A) weisen massenmittlere Molekulargewichte Mw > 500 Dalton, gemessen mittels GPC (Gelpermeationschromatographie), bevorzugt zwischen 800 und 100.000 Dalton, insbesondere zwischen 1.000 und 50.000 Dalton auf. Besonders bevorzugt sind Polyesterpolyole, Polyurethanpolyole, Polysiloxanpolyole und insbesondere Polyacrylatpolyole und/oder Polymethacrylatpolyole sowie deren Mischpolymerisate, im folgenden Polyacrylatpolyole genannt. Die Polyole weisen bevorzugt eine OH-Zahl von 30 bis 400 mg KOH/g, insbesondere zwischen 100 und 300 KOH/g, auf. Die Glasübergangstemperaturen, gemessen per DSC (DifferentialThermoanalyse), der Polyole liegen bevorzugt zwischen -150 und 100 °C, besonders bevorzugt zwischen -120°C und 80°C.

Geeignete Polyesterpolyole sind beispielsweise in EP-A-0 994 117 und EP-A-1 273 640 beschrieben. Polyurethanpolyole werden vorzugsweise durch Umsetzung von Polyesterpolyol-Präpolymeren mit geeigneten Di- oder Polyisocyanaten hergestellt und sind beispielsweise in EP-A-1 273 640 beschrieben. Geeignete Polysiloxanpolyole sind beispielsweise in der WO-A-01/09260 beschrieben, wobei die dort angeführten Polysiloxanpolyole bevorzugt in Kombination mit weiteren Polyolen, insbesondere solchen mit höheren Glasübergangstemperaturen, zum Einsatz kommen können.

Die erfindungsgemäß ganz besonders bevorzugten Polyacrylatpolyole sind in der Regel Copolymerisate und weisen vorzugsweise massenmittlere Molekulargewichte Mw zwischen 1.000 und 20.000 Dalton, insbesondere zwischen 1.500 und 10.000 Dalton auf, jeweils gemessen mittels Gelpermeationschromatographie (GPC) gegen einen Polystyrolstandard. Die Glasübergangstemperatur der Copolymerisate liegt in der Regel zwischen -100 und 100 °C, insbesondere zwischen -50 und 80 °C (gemessen mittels DSC-Messungen). Die Polyacrylatpolyole weisen bevorzugt eine OH-Zahl von 60 bis 250 mg KOH/g, insbesondere zwischen 70 und 200 KOH/g, sowie eine Säurezahl zwischen 0 und 30 mg KOH/g, auf.

Die Hydroxylzahl (OH-Zahl) gibt an, wieviel mg Kaliumhydroxid der Essigsäure-Menge äquivalent sind, die von 1 g Substanz bei der Acetylierung gebunden wird. Die Probe wird bei der Bestimmung mit Essigsäureanhydrid-Pyridin gekocht und die entstehende Säure mit Kaliumhydroxidlösung titriert (DIN 53240-2). Die Säurezahl gibt hierbei die Anzahl der mg Kaliumhydroxyid an, die zur Neutralisation von 1 g der jeweiligen Verbindung der Komponente (b) verbraucht wird (DIN EN ISO 2114).

Auch durch die Auswahl der hydroxylgruppenhaltigen Bindemittel kann der Nachvemetzungsindex beeinflusst werden. Im Allgemeinen kann nämlich mit steigender OH-Zahl der Komponente (A) der Silanisierungsgrad, d.h. die Menge Struktureinheiten der Formel (I) bzw. (II) bzw. (III), erniedrigt werden, was wiederum einen niedrigeren Nachvemetzungsindex zur Folge hat.

Als hydroxylgruppenhaltige Monomerbausteine werden bevorzugt Hydroxyalkylacrylate und/oder Hydroxyalkylmethacrylate, wie insbesondere 2-Hydroxyethylacrylat, 2-Hydroxyethylmethacrylat, 2- Hydroxypropylacrylat, 2- Hydroxypropylmethacrylat, 3-Hydroxypropylacrylat, 3-Hydroxypropylmethacrylat , 3-Hydroxybutylacrylat, 3-Hydroxybutylmethacrylat sowie insbesondere 4-Hydroxybutylacrylat und/oder 4-Hydroxybutylmethacrylat, eingesetzt.

Als weitere Monomerbausteine werden für die Polyacrylatpolyole bevorzugt Alkylmethacrylate und/oder Alkylmethacrylate eingesetzt, wie vorzugsweise Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate und/- oder Cycloalkylmethacrylate, wie Cyclopentylacrylat, Cyclopentylmethacrylat, Isobornylacrylat, Isobomylmethacrylat oder insbesondere Cyclohexylacrylat und/oder Cyclohexylmethacrylat.

Als weitere Monomerbausteine für die Polyacrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

In einer weiteren Ausführungsform der Erfindung weist die hydroxylgruppenhaltige Verbindung A neben den Hydroxylgruppen Struktureinheiten der Formel (I) und/oder der Formel (11) und/oder der Formel (III) auf.

Struktureinheiten der Formel (II) können in die Verbindung (A) durch Einbau von Monomereinheiten mit solchen Struktureinheiten oder durch Umsetzung von Polyolen, die weitere funktionelle Gruppen aufweisen, mit einer Verbindung der Formel (IIa)

HN(X-SiR"x(OR')3-x)n(X'-SiR"y(OR')3-y)m (IIa),

eingeführt werden, wobei die Substituenten die obengenannte Bedeutung haben. Zur Umsetzung des Polyols mit der Verbindung (IIa) weist dieses entsprechend weitere funktionelle Gruppen auf, welche mit der sekundären Aminogruppe der Verbindung (IIa) reagieren, wie insbesondere Säure- oder Epoxygruppen. Erfindungsgemäß bevorzugte Verbindungen (IIa) sind Bis(2-ethyltrimethoxysilyl)amin, Bis(3-propyltrimethoxy-silyl)amin, Bis(4-butyltrimethoxysilyl)amin, Bis(2-ethyltriethoxysilyl)amin, Bis(3-propyltriethoxysilyl)amin und/oder Bis(4-butyltriethoxysilyl)amin. Ganz besonders bevorzugt ist Bis(3-propyltrimethoxysilyl)amin. Solche Aminosilane sind beispielsweise unter dem Markennamen DYNASILAN ® der Fa. DEGUSSA bzw. Silquest ® der Fa. OSI verfügbar.

Monomerbausteine, die die Strukturelemente (II) tragen, sind vorzugsweise Umsetzungsprodukte der Acryl- und/oder der Methacrylsäure oder von epoxygruppenhaltigen Alkylacrylaten und/oder -methacrylaten mit den oben genannten Verbindungen (IIa).

Struktureinheiten der Formel (III) können in die Verbindung (A) durch Einbau von Monomereinheiten mit solchen Struktureinheiten oder durch Umsetzung von Polyolen, die weitere funktionelle Gruppen aufweisen, mit einer Verbindung der Formel (IIIa)

H-Z-(X-SiR"x(OR')3-x) (IIIa),

eingeführt werden, wobei die Substituenten die obengenannte Bedeutung haben. Zur Umsetzung des Polyols mit der Verbindung (IIIa) weist dieses entsprechend weitere funktionelle Gruppen auf, welche mit der funktionellen Gruppe -ZH der Verbindung (IIIa) reagieren, wie insbesondere Säure-, Epoxy- oder Estergruppen. Erfindungsgemäß bevorzugte Verbindungen (IIIa) sind omega-Aminoalkyl- oder omega-Hydroxyalkyltrialkoxysilane, wie vorzugsweise 2-Aminoethyltrimethoxysilan, 2-Aminoethyltriethoxysilan, 3-Aminopropyltrimethoxysilan, 3-Aminopropyltriethoxysilan, 4-Aminobutyltrimethoxysilan, , 4-Aminobutyltriethoxysilan, 2-Hydroxyethyltrimethoxysilan, 2-Hydroxyethyltriethoxysilan, 3-Hydroxypropyltrimethoxysilan, 3-Hydroxypropyltriethoxysilan, 4-Hydroxybutyltrimethoxysilan, 4-Hydroxybutyltriethoxysilan. Besonders bevorzugte Verbindungen (IIIa) sind N-(2- (trimethoxysilyl)ethyl)alkylamine, N-(3-(trimethoxysilyl) propyl)alkylamine, N-(4-(trimethoxysilyl) butyl)alkylamine , N-(2-(triethoxysilyl) ethyl)alkylamine, N-(3-(triethoxysilyl) propyl)alkylamine und/oder N-(4-(triethoxysilyl) butyl)alkylamine. Ganz besonders bevorzugt ist N-(3-(trimethoxysilyl) propyl)butylamin. Solche Aminosilane sind beispielsweise unter dem Markennamen DYNASILAN ® der Fa. DEGUSSA bzw. Silquest ® der Fa. OSI verfügbar.

Monomerbausteine, die die Strukturelemente (III) tragen, sind vorzugsweise Umsetzungsprodukte der Acryl- und/oder der Methacrylsäure oder von epoxygruppenhaltigen Alkylacrylaten und/oder -methacrylaten, sowie im Falle hydroxyfunktioneller Alkoxylsilylverbindungen Umesterungsprodukte von Alkylacrylaten und/oder -methacrylaten, insbesondere mit den oben genannten hydroxy- und/oder aminofunktionellen Alkoxysilylverbindungen (IIIa).

### Die isocyanatgruppenhaltigen Verbindungen (B)

Als Komponente (B) enthalten die erfindungsgemäßen Beschichtungsmittel eine oder mehrere Verbindungen mit freien, d.h. unbtockierten, und/oder blockierten Isocyanatgruppen. Bevorzugt enthalten die erfindungsgemäßen Beschichtungsmittel Verbindungen (B) mit freien Isocyanatgruppen. Die freien Isocyanatgruppen des isocyanatgruppenhaltigen Verbindungen B können aber auch in blockierter Form eingesetzt werden. Dies ist bevorzugt dann der Fall, wenn die erfindungsgemäßen Beschichtungsmittel als einkomponentige Systeme eingesetzt werden.

Die als Grundkörper für die erfindungsgemäß bevorzugt eingesetzten isocyanatgruppenhaltigen Verbindungen (B) dienenden Di- und/oder Polyisocyanate sind bevorzugt an sich bekannte substituierte oder unsubstituierte aromatische, aliphatische, cycloaliphatische und/oder heterocyclische Polyisocyanate. Beispiele für bevorzugte Polyisocyanate sind: 2,4-Toluoldiisocyanat, 2,6-Toluoldiisocyanat, Diphenylmethan-4,4'-diisocyanat, Diphenylmethan-2,4'-diisocyanat, p-Phenylendiisocyanat, Biphenyldiisocyanate, 3,3'-Dimethyl-4,4'-diphenylendiisocyanat, Tetramethylen-1,4-diisocyanat, Hexamethylen-1,6-diisocyanat, 2,2,4-Tri-methylhexane-1,6-diisocyanat, Isophorondüsocyanat, Ethylendiisocyanat, 1,12-Dodecandiisocyanat, Cyclobutan-1,3-diisocyanat, Cyclohexan-1,3-diisocyanat, Cyclohexan-1,4-diisocyanat, Methylcyclohexyldiisocyanate, Hexahydrotoluol-2,4-diisocyanat, Hexahydrotoluol-2,6-diisocyanat, Hexahydrophenylen-1,3-diisocyanat, Hexahydrophenylen-1,4-diisocyanat, Perhydrodiphenylmethan-2,4'-diisocyanat, 4,4'-Methylendicyclohexyldiisocyanat (z.B. Desmodur ® W der Fa. Bayer AG), Tetramethylxylyldiisocyanate (z.B. TMXDI ® der Fa. American Cyanamid) und Mischungen der vorgenannten Polyisocyanate. Weiterhin bevorzugte Polyisocyanate sind die Biuret-Dimere und die Isocyanurat-Trimere der vorgenannten Diisocyanate.

Besonders bevorzugte Polyisocyanate PI sind Hexamethylen-1,6-diisocyanat, Isophorondiisocyanat und 4,4'-Methylendicyclohexyldiisocyanat, deren Biuret-Dimere und/oder Isocyanurat-Trimere.

In einer weiteren Ausführungsform der Erfindung sind die Polyisocyanate Polyisocyanat-Präpolymerisate mit Urethan-Struktureinheiten, welche durch Umsetzung von Polyolen mit einem stöchiometrischen Überschuß an vorgenannten Polyisocyanaten erhalten werden. Solche Polyisocyanat-Präpolymere sind beispielsweise in US-A-4,598,131 beschrieben.

Die erfindungsgemäß eingesetzten, mit den Struktureinheiten (II) und (III) funktionalisierten isocyanatgruppenhaltigen Verbindungen (B) werden bevorzugt durch Umsetzung der vorgenannten Di- und/oder Polyisocyanate mit den vorgenannten Verbindungen (IIa) und (IIIa) hergestellt, indem zwischen 2,5 und 90 mol-%, bevorzugt 5 bis 85 mol-%, besonders bevorzugt 7,5 bis 80 mol-%, der Isocyanatgruppen im Polyisocyanatgrundkörper mit mindestens einer Verbindung (IIa) und zwischen 2,5 und 90 mol-%, bevorzugt 5 bis 85 mol-%, besonders bevorzugt 7,5 bis 80 mol-%, der Isocyanatgruppen im Polyisocyanatgrundkörper mit mindestens einer Verbindung (IIIa) umgesetzt werden.

Der Gesamtanteil der mit den Verbindungen (IIa) und/oder (IIIa) umgesetzten Isocyanatgruppen liegt in der Polyisocyanatverbindung (B) zwischen 5 und 95 mol%, bevorzugt zwischen 10 und 90 mol-%, besonders bevorzugt zwischen 15 und 85 mol-% der Isocyanatgruppen im Polyisocyanatgrundkörper. Insbesondere bei einem hohen Silanisierungsgrad, d.h. wenn ein hoher Anteil der Isocyanatgruppen, insbesondere von mindestens 50 mol-%, mit den Verbindungen (IIa) / (IIIa) umgesetzt worden ist, werden die Isocyanatgruppen vorteilhafterweise mit einer Mischung der Verbindungen (IIa) und (IIIa) umgesetzt.

Besonders bevorzugte Verbindungen (IIa) sind Bis(2-ethyltrimethoxysilyl)amin, Bis(3-propyltrimethoxysilyl)amin, Bis(4-butyltrimethoxysilyl)-amin, Bis(2-ethyltriethoxysilyl)amin, Bis(3-propyltriethoxysilyl)amin und/oder Bis(4-butyltriethoxysilyl)amin. Ganz besonders bevorzugt ist Bis(3-propyltrimethoxysilyl)amin. Solche Aminosilane sind beispielsweise unter dem Markennamen DYNASILAN ® der Fa. DEGUSSA bzw. Silquest ® der Fa. OSI verfügbar.

Bevorzugte Verbindungen (IIIa) sind 2-Aminoethyltrimethoxysilan, 2-Aminoethyltriethoxysilan, 3-Aminopropyltrimethoxysilan, 3-Aminopropyltriethoxysilan, 4-Aminobutyltrimethoxysilan, , 4-Aminobutyltriethoxysilan, 2-Hydroxyethyltrimethoxysilan, 2-Hydroxyethyltriethoxysilan, 3-Hydroxypropyltrimethoxysilan, 3-Hydroxypropyltriethoxysilan, 4-Hydroxybutyltrimethoxysilan, 4-Hydroxybutyltriethoxysilan.

Besonders bevorzugte Verbindungen (IIIa) sind N-(2- (trimethoxysilyl) ethyl)alkylamine, N-(3-(trimethoxysilyl) propyl)alkylamine, N-(4-(trimethoxysilyl) butyl)alkylamine , N-(2-(triethoxysilyl) ethyl)alkylamine, N-(3-(triethoxysilyl) propyl)alkylamine und/oder N-(4-(triethoxysilyl) butyl)alkylamine. Ganz besonders bevorzugt ist N-(3-(trimethoxysilyl) propyl)butylamin. Solche Aminosilane sind beispielsweise unter dem Markennamen DYNASILAN ® der Fa. DEGUSSA bzw. Silquest ® der Fa. OSI verfügbar.

Ganz besonders bevorzugte isocyanatgruppenhaltige Verbindungen (B) sind Umsetzungsprodukte von Hexamethylen-1,6-diisocyanat und/oder Isophorondiisocyanat, und/oder deren Isocyanurat-Trimere mit Bis(3-propyltrimethoxysilyl)amin und N-(3-(trimethoxysilyl) propyl)butylamin. Die Umsetzung der isocyanatgruppenhaltigen Verbindungen (B) mit den Verbindungen (IIa) und (IIIa) erfolgt vorzugsweise in Inertgasatmosphäre bei Temperaturen von maximal 100 °C, bevorzugt von maximal 60 °C.

Die freien Isocyanatgruppen des isocyanatgruppenhaltigen Verbindungen B können auch in blockierter Form eingesetzt werden. Dies ist bevorzugt dann der Fall, wenn die erfindungsgemäßen Beschichtungsmittel als einkomponentige Systeme eingesetzt werden. Zur Blockierung kann im Prinzip jedes für die Blockierung von Polyisocyanaten einsetzbare Blockierungsmittel mit einer ausreichend tiefen Deblockierungstemperatur eingesetzt werden. Derartige Blockierungsmittel sind dem Fachmann gut geläufig. Bevorzugt werden Blockierungsmittel, wie sie in EP-A-0 626 888 und EP-A-0 692 007 beschrieben sind, eingesetzt.

### Die Kombination der Komponenten A und B sowie weitere Komponenten des Beschichtungsmittels

Der Gewichtsanteil der einzusetzenden hydroxylgruppenhaltigen Verbindungen A, bezogen auf den Gewichtsanteil der isocyanatgruppenhaltigen Verbindungen B, hängt vom Hydroxyäquivalentgewicht des Polyols und vom Äquivalentgewicht der freien Isocyanatgruppen des Polyisocyanats B ab.

Es ist bevorzugt, dass im erfindungsgemäßen Beschichtungsmittel ein oder mehrere Bestandteile zwischen 2,5 bis 97,5 mol%, bezogen auf die Summe der Struktureinheiten (II) und (III), mindestens einer Struktureinheit (II) und zwischen 2,5 bis 97,5 mol-%, bezogen auf die Summe der Struktureinheiten (II) und (III), mindestens einer Struktureinheit (III) aufweisen.

Die erfindungsgemäßen Beschichtungsmittel enthalten bevorzugt zwischen 2,5 und 97,5 Gew.-%, besonders bevorzugt zwischen 5 und 95 Gew.-%, ganz besonders bevorzugt zwischen 10 und 90 Gew.%, insbesondere zwischen 20 und 80 Gew.%, bezogen auf den Gehalt an nichtflüchtigen Substanzen im Beschichtungsmittel, der hydroxylgruppenhaltigen Verbindungen (A) und bevorzugt zwischen 2,5 und 97,5 Gew.-%, besonders bevorzugt zwischen 5 und 95 Gew.-%, ganz besonders bevorzugt zwischen 10 und 90 Gew.-%, insbesondere zwischen 20 und 80 Gew.-%, bezogen auf den Gehalt an nichtflüchtigen Substanzen im Beschichtungsmittel, der isocyanatgruppenhaltigen Verbindungen (B).

Bezogen auf die Summe der für die Vernetzung im erfindungsgemäßen Beschichtungsmittel maßgeblichen funktionellen Gruppen, gebildet aus den Anteilen der Hydroxyl- und Isocyanatgruppen sowie den Anteilen der Strukturelemente (I) und/oder (II) und/oder (III), sind die Strukturelemente (I) und/oder (II) und/oder (III) bevorzugt in Anteilen von 2,5 bis 97,5 mol-%, besonders bevorzugt zwischen 5 und 95 mol-% und ganz besonders bevorzugt zwischen 10 und 90 mol-%, vorhanden.

Um weiter verbesserte sehr gute Beständigkeiten der erfndungsgemäßen Beschichtungen gegen Rissbildung bei UV-Strahlung und Feucht-Trockenwechsel im CAM180-Test (nach DIN EN ISO 11341 Feb 98 und DIN EN ISO 4892-2 Nov 00) in Kombination mit einer hohen Kratzfestigkeit direkt im Anschluß an die thermische Endhärtung, einen hohen Glanz und einen hohen Glanzerhalt nach Bewitterung zu gewährleisten, ist es außerdem bevorzugt, den Gehalt an Struktureinheiten (I) und/oder (II) und/oder (III) maximal so hoch zu wählen, dass die erfindungsgemäßen Beschichtungsmittel im endgehärteten Zustand einen Speichermodul E' (200°C), gemessen bei 200°C nach der vorstehend bei der Beschreibung des PCI beschriebenen Methode, von kleiner als 4 * 10 ⁸ Pa, insbesondere von kleiner gleich 3* 10 ⁸ Pa, aufweisen.

Es ist weiterhin besonders bevorzugt, den Gehalt an Struktureinheiten (I) und/oder (II) und/oder (III) maximal so hoch zu wählen, dass die erfindungsgemäßen Beschichtungsmittel weniger als 6,5 Massen-% Si der Struktureinheiten (I)) und/oder (II) und/oder (III), ganz besonders bevor zugt maximal 6,0 Massen-% Si der Struktureinheiten (I) ) und/oder (II) und/oder (III), jeweils bezogen auf den Feststoffgehalt der Beschichtungsmittel, enthalten. Der Silangehalt in Masse-% Si wird dabei rechnerisch aus den eingesetzten Mengen an den Verbindungen mit der Struktureinheit (I) bzw. den Verbindungen (IIa) bzw. (IIIa) ermittelt.

In einer weiteren Ausführungsform der Erfindung können die Strukturelemente (I), (II) und/oder (III) zusätzlich auch Bestandteil einer oder mehrerer, sich von den Komponenten (A) und (B) unterscheidender weiterer Komponenten (C) sein, wobei die vorgenannten Kriterien anzuwenden sind. Beispielsweise können als Komponente (C) Oligomerisate oder Polymerisate mit Alkoxysilyl-Gruppen eingesetzt werden, wie beispielsweise die in den Patent(anmeldung)en US-A-4,499,150, US-A-4,499,151 oder EP-A-0 571 073 genannten Poly(meth)acrylate als Träger von Strukturelementen (III) oder die in der WO-A-2006/042585 genannten Verbindungen als Träger von Strukturelementen (II). In der Regel werden solche Komponenten (C) in Anteilen von bis zu 40 Gew.%, bevorzugt von bis zu 30 Gew.-%, besonders bevorzugt von bis zu 25 Gew.-%, bezogen auf die nichtflüchtigen Bestandteile des Beschichtungsmittels, eingesetzt.
Die Gewichtsanteile des Polyols A und des Polyisocyanats B werden vorzugsweise solchermaßen gewählt, dass das molare Äquivalentverhältnis der nicht umgesetzten Isocyanatgruppen der isocyanathaltigen Verbindungen (B) zu den Hydroxylgruppen der hydroxylgruppenhaltigen Verbindungen (A) zwischen 0,9:1 und 1:1,1, bevorzugt zwischen 0,95:1 und 1,05:1, besonders bevorzugt zwischen 0,98:1 und 1,02:1, liegt.

Handelt es sich um einkomponentige Beschichtungsmittel, so werden die isocyanatgruppenhaltigen Verbindungen (B) gewählt, deren freie Isocyanatgruppen mit den oben beschriebenen Blockierungsmitteln blockiert sind.

Bei den erfindungsgemäß bevorzugten 2-komponentigen (2K) Beschichtungsmitteln wird kurz vor der Applikation des Beschichtungsmittel eine Lackkomponente, enthaltend die hydroxylgruppenhaltige Verbindung (A) sowie weitere nachfolgend beschriebene Komponenten, mit einer weiteren Lackkomponente, enthaltend die isocyanatgruppenhaltige Verbindung (B) und gegebenenfalls weitere der nachfolgend beschriebenen Komponenten in an sich bekannter Weise vermischt, wobei in der Regel die Lackkomponente, die die Verbindung (A) enthält, den Katalysator sowie einen Teil des Lösemittels enthält.

Als Lösemittel für die erfindungsgemäßen Beschichtungsmittel sind insbesondere solche geeignet, die im Beschichtungsmittel chemisch inert gegenüber den Verbindungen (A) und (B) sind und die auch bei der Härtung des Beschichtungsmittels nicht mit (A) und (B) reagieren. Beispiele für solche Lösemittel sind aliphatische und/oder aromatische Kohlenwasserstoffe wie Toluol, Xylol, Solventnaphtha, Solvesso 100 oder Hydrosol ® (Fa. ARAL), Ketone, wie Aceton, Methylethylketon oder Methylamylketon, Ester, wie Ethylacetat, Butylacetat, Pentylacetat oder Ethylethoxypropionat, Ether oder Mischungen aus den vorgenannten Lösemitteln. Bevorzugt weisen die aprotischen Lösemittel oder Lösemittelgemische einen Wassergehalt von maximal 1 Gew.%, besonders bevorzugt maximal 0,5 Gew.-%, bezogen auf das Lösemittel auf.

Neben den Verbindungen (A), (B) und (C) können noch weitere Bindemittel (E) eingesetzt werden, welche vorzugsweise mit den Hydroxylgruppen der Verbindung (A) und/oder mit den freien Isocyanatgruppen der Verbindung (B) und/oder mit den Alkoxysilylgruppen der Verbindungen (A), (B) und/oder (C) reagieren und Netzwerkpunkte ausbilden können.

Beispielsweise sind als Komponente (E) Aminoplastharze und/oder Epoxyharze, verwendbar. Es kommen die üblichen und bekannten Aminoplastharze in Betracht, deren Methylol- und/oder Methoxymethylgruppenteilweise mittels Carbamat- oder Allophanatgruppen defunktionalisiert sein können. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

In der Regel werden solche Komponenten (E) in Anteilen von bis zu 40 Gew.-%, bevorzugt von bis zu 30 Gew.-%, besonders bevorzugt von bis zu 25 Gew,-%, bezogen auf die nichtflüchtigen Bestandteile des Beschichtungsmittels, eingesetzt.

Darüber hinaus kann das erfindungsgemäße Beschichtungsmittel mindestens ein übliches und bekanntes Lackadditiv in wirksamen Mengen, d.h. in Mengen vorzugsweise bis zu 30 Gew.-%, besonders bevorzugt bis zu 25 Gew.-% und insbesondere bis zu 20 Gew.-%, jeweils bezogen auf die nichtflüchtigen Bestandteile des Beschichtungsmittels, enthalten. Beispiele geeigneter Lackadditive sind:
- insbesondere UV-Absorber;
- insbesondere Lichtschutzmittel wie HALS-Verbindungen, Benztriazole oder Oxalanilide;
- Radikalfänger;
- Slipadditive;
- Polymerisationsinhibitoren;
- Entschäumer;
- Reaktiwerdünner, wie sie aus dem Stand der Technik allgemein bekannt sind, welche bevorzugt inert gegenüber den -Si(OR)3-Gruppen sind.
- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;
- Verfaufmittel;
- filmbildende Hilfsmittel wie Cellulose-Derivate;
- Füllstoffe wie beispielsweise Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- rheologiesteuemde Additive, wie die aus den Patentschriften WO 94/22968, EP-A-0 276 501, EP-A-0 249 201 oder WO 97/12945 bekannten Additive; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäure-anhydrid-Copolymere und ihre Derivate oder hydrophob modifizierte ethoxylierte Urethane oder Polyacrylate;
- und /oder Flammschutzmittel.

In einer weiteren Ausführungsform der Erfindung kann das erfindungsgemäße Beschichtungsmittel noch weitere Pigmente und/oder Füllstoffe enthalten und zur Herstellung pigmentierter Topcoats dienen. Die dafür eingesetzten Pigmente und/oder Füllstoffe sind dem Fachmann bekannt.

Da die aus den erfindungsgemäßen Beschichtungsmitteln hergestellten erfindungsgemäßen Beschichtungen auch auf bereits ausgehärteten Elektrotauchlackierungen, Füllerlackierungen, Basislackierungen oder üblichen und bekannten Klarlackierungen hervorragend haften, eignen sie sich neben dem Einsatz in der Automobilserien(OEM)lackierung ausgezeichnet für die Autoreparatudackierung oder die modulare Kratzfestausrüstung von bereits lackierten Automobilkarosserien.

Die Applikation der erfindungsgemäßen Beschichtungsmittel kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Die Aushärtung der applizierten erfindungsgemäßen Beschichtungsmittel kann nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Die thermische Härtung der Beschichtungsmittel weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung).
Vorteilhafterweise erfolgt die thermische Härtung bei einer Temperatur von 30 bis 200°C, besonders bevorzugt 40 bis 190°C und insbesondere 50 bis 180°C während einer Zeit von 1 min bis zu 10 h, besonders bevorzugt 2 min bis zu 5 h und insbesondere 3 min bis 3 h, wobei bei den für die Automobilreparaturiackierung angewandten Temperaturen, die bevorzugt zwischen 30 und 90°C liegen, auch längere Härtzeiten zur Anwendung kommen können.

Die erfindungsgemäßen Beschichtungsmittel liefern neue gehärtete Beschichtungen, insbesondere Lackierungen, speziell Klarlackierungen, Formteile, speziell optische Formteile, und freitragende Folien, die hoch kratzfest und insbesondere chemikalien- und witterungsstabil sind. Insbesondere lassen sich die erfindungsgemäßen Beschichtungen und Lackierungen, speziell die Klarlackierungen, auch in Schichtdicken > 40 µm herstellen, ohne dass Spannungsrisse auftreten.

Die erfindungsgemäßen Beschichtungsmittel eignen sich daher hervorragend als dekorative, schützende und/oder effektgebende, hoch kratzfeste Beschichtungen und Lackierungen von Karosserien von Fortbewegungsmitteln (insbesondere Kraftfahrzeuge, wie Motorräder, Busse, LKW oder PKW) oder von Teilen hiervon; von Bauwerken im Innen- und Außenbereich; von Möbeln, Fenstern und Türen; von Kunststoffformteilen, insbesondere CDs und Fenster; von industriellen Kleinteilen, von Coils, Containern und Emballagen; von weißer Ware; von Folien; von optischen, elektrotechnischen und mechanische Bauteilen sowie von Glashohlkörpem und Gegenständen des täglichen Bedarfs.

Insbesondere werden die erfindungsgemäßen Beschichtungsmittel und Lackierungen, insbesondere die Klarlackierungen, in dem technologisch und ästhetisch besonders anspruchsvollen Gebiet der Automobilserienlackierung (OEM) sowie der Automobilreparaturlackierung eingesetzt. Besonders bevorzugt werden die erfindungsgemäßen Beschichtungsmittel in mehrstufigen Beschichtungsverfahren eingesetzt, insbesondere bei Verfahren, bei dem auf ein gegebenenfalls vorbeschichtetes Substrat zunächst eine pigmentierte Basislackschicht und danach eine Schicht mit den erfindungsgemäßen Beschichtungsmittel aufgetragen werden.

Es können sowohl wasserverdünnbare Basislacke als auch Basislacke auf Basis von organischen Lösemitteln eingesetzt werden. Geeignete Basislacke sind beispielsweise in der EP-A-0 692 007 und in den dort in Spalte 3, Zeilen 50ff., angeführten Dokumenten beschrieben. Bevorzugt wird der aufgebrachte Basislack zunächst getrocknet, das heißt dem Basislackfilm wird in einer Abdunstphase wenigstens ein Teil des organischen Lösemittels beziehungsweise des Wassers entzogen. Die Trocknung erfolgt vorzugsweise bei Temperaturen von Raumtemperatur bis 80°C. Nach der Trocknung wird das erfindungsgemäße Beschichtungsmittel aufgebracht. Anschließend wird die Zweischichtlackierung bevorzugt unter bei der Automobilserienlackierung angewandten Bedingungen bei Temperaturen von 30 bis 200°C, besonders bevorzugt 40 bis 190°C und insbesondere 50 bis 180°C, während einer Zeit von 1 min bis zu 10 h, besonders bevorzugt 2 min bis zu 5 h und insbesondere 3 min bis 3 h, eingebrannt, wobei bei den für die Automobilreparaturlackierung angewandten Temperaturen, die bevorzugt zwischen 30 und 90°C liegen, auch längere Härtzeiten zur Anwendung kommen können.

Die mit dem erfindungsgemäßen Beschichtungsmittel erzeugten Schichten zeichnen sich vor allem durch eine besonders hohe Chemikalien- und Witterungsbeständigkeit sowie eine sehr gute Waschstraßenbeständigkeit und Kratzfestigkeit aus, insbesondere durch eine herausragende Kombination von Kratzfestigkeit und Witterungsstabilität gegen UV-Strahlung im Feucht-Trockenzyklus.

In einer weiteren bevorzugten Ausführungsform der Erfindung wird das erfindungsgemäße Beschichtungsmittel als transparenter Klarlack zur Beschichtung von Kunststoffsubstraten, insbesondere von transparenten Kunststoffsubstraten, eingesetzt. In diesem Fall beinhalten die Beschichtungsmittel UV-Absorber, die in Menge und Art auch auf den wirksamen UV-Schutz des Kunststoffsubstrats ausgelegt sind. Auch hier zeichnen sich die Beschichtungsmittel durch eine herausragende Kombination von Kratzfestigkeit und Witterungsstabilität gegen UV-Strahlung im Feucht-Trockenzyklus aus. Die solchermaßen beschichteten Kunststoffsubstrate werden vorzugsweise für den Ersatz von Glaskomponenten im Automobilbau eingesetzt, wobei die Kunststoffsubstrate bevorzugt aus Polymethylmethacrylat oder Polycarbonat bestehen.

### Beispiele

### Herstellung der erfindungsgemäßen Komponente B

### Herstellbeispiel B1 - Herstellung eines teilsilanisierten Polyisocyanats (HDI mit 100 mol-% IIIa: Umsetzungsgrad c = 30 mol-%)

In einem Dreihalsglaskolben, ausgestattet mit einem Rückflußkühler und einem Thermometer, werden 57,3 Gewichtsteile trimerisiertes Hexamethylendiisocyanat (HDI) (Basonat HI 100 der Fa. BASF AG) und 88,0 Gewichtsteile Solventnaphta vorgelegt. Unter Rückflusskühlung, Stickstoffüberschleierung und Rühren werden 21,8 Gewichtsteile N-[3-(trimethoxysilyl)propyl]-butylamin (IIIa) (Dynasilan ® 1189 der Fa. Degussa) so zudosiert, das 50 bis 60°C nicht überschritten werden. Nach Ende der Dosierung wird die Reaktionstemperatur bei 50 bis 60°C gehalten, bis der mittels Titration ermittelte Isocyanat-Massenanteil bei den theoretisch errechneten 70 mol-% liegt.
Die Lösung des teilsilanisierten Polyisocyanats weist einen Festkörpergehalt von 47,1 Gew.-% auf.

### Herstellbeispiel B2 - Herstellung eines teilsilanisierten Polyisocyanats (HDI mit 70 mol-% IIIa und 30 mol% IIa: Umsetzungtsgrad c = 30 mol-%)

In einem Dreihalsglaskolben, ausgestattet mit einem Rückflußkühler und einem Thermometer, werden 57,3 Gewichtsteile trimerisiertes Hexamethylendiisocyanat (HDI) (Basonat HI 100 der Fa. BASF AG) und 69,7 Gewichtsteile Solventnaphta vorgelegt. Unter Rückflusskühlung, Stickstoffüberschleierung und Rühren wird eine Mischung aus 14,8 Gewichtsteilen N-[3-(trimethoxysilyl)propyl]-butylamin (Dynasilan ® 1189 der Fa. Degussa) (IIIa) und 9,2 Gewichtsteilen Bis-[3-(trimethoxysilyl)propyl]-amin (IIa) (Dynasilan ® 1124 der Fa. Degussa) so zudosiert, das 50 bis 60°C nicht überschritten werden. Nach Ende der Dosierung wird die Reaktionstemperatur bei 50 bis 60°C gehalten, bis der mittels Titration ermittelte Isocyanat-Massenanteil bei den theoretisch errechneten 70 mol% liegt.
Die Lösung des teilsilanisierten Polyisocyanats weist einen Festkörpergehalt von 53,9 Gew.-% auf.

### Herstellbeispiel B3 - Herstellung eines teilsilanisierten Polyisocyanats (HDI mit 30 mol-% IIIa und 70 mol-% IIa: Umsetzungsgrad c = 30 mol%)

In einem Dreihalsglaskolben, ausgestattet mit einem Rückflußkühler und einem Thermometer, werden 57,3 Gewichtsteile trimerisiertes Hexamethylendiisocyanat (HDI) (Basonat HI 100 der Fa. BASF AG) und 69,7 Gewichtsteile Solventnaphta vorgelegt. Unter Rückflusskühtung, Stickstoffüberschleierung und Rühren wird eine Mischung aus 6,4 Gewichtsteilen N-[3-(trimethoxysilyl)propyl]-butylamin (Dynasilan ® 1189 der Fa. Degussa) (IIIa) und 21,5 Gewichtsteilen Bis-[3-(trimethoxysilyl)propyl]-amin (IIa) (Dynasilan ® 1124 der Fa. Degussa) so zudosiert, das 50 bis 60°C nicht überschritten werden. Nach Ende der Dosierung wird die Reaktionstemperatur bei 50 bis 60°C gehalten, bis der mittels Titration ermittelte Isocyanat-Massenanteil bei den theoretisch errechneten 70 mol-% liegt.
Die Lösung des teilsilanisierten Polyisocyanats weist einen Festkörpergehalt von 55,0 Gew.-% auf.

### Herstellbeispiel B4 - Herstellung eines teilsilanisierten Polyisocyanats (HDI mit 100 mol-% IIa: Umsetzungsgrad c = 30 mol%)

In einem Dreihalsglaskolben, ausgestattet mit einem Rückflußkühler und einem Thermometer, werden 57,3 Gewichtsteile trimerisiertes Hexamethylendiisocyanat (HDI) (Basonat HI 100 der Fa. BASF AG) und 88,0 Gewichtsteile Solventnaphta vorgelegt. Unter Rückflusskühlung, Stickstoffüberschleierung und Rühren werden 30,7 Gewichtsteile Gewichtsteilen Bis-[3-(trimethoxysilyl)propyl]-amin (IIa) (Dynasilan ® 1124 der Fa. Degussa) so zudosiert, das 50 bis 60°C nicht überschritten werden. Nach Ende der Dosierung wird die Reaktionstemperatur bei 50 bis 60°C gehalten, bis der mittels Titration ermittelte Isocyanat-Massenanteil bei den theoretisch errechneten 70 mol-% liegt.
Die Lösung des teilsilanisierten Polyisocyanats weist einen Festkörpergehalt von 63,0 Gew.-% auf.

### Herstellbeispiel B5 - Herstellung eines teilsilanisierten Polyisocyanats (HDI mit 100 mol-% IIIa: Umsetzungsgrad c = 70 mol-%)

In einem Dreihalsglaskolben, ausgestattet mit einem Rückflußkühler und einem Thermometer, werden 57,3 Gewichtsteile trimerisiertes Hexamethylendiisocyanat (HDI) (Basonat HI 100 der Fa. BASF AG) und 88,0 Gewichtsteile Solventnaphta vorgelegt. Unter Rückflusskühlung, Stickstoffüberschleierung und Rühren werden 49,4 Gewichtsteile N-[3-(trimethoxysilyl)propyl]-butylamin (IIIa) (Dynasilan ® 1189 der Fa. Degussa) so zudosiert, das 50 bis 60°C nicht überschritten werden. Nach Ende der Dosierung wird die Reaktionstemperatur bei 50 bis 60°C gehalten, bis der mittels Titration ermittelte Isocyanat-Massenanteil bei den theoretisch errechneten 30 mol-% liegt.
Die Lösung des teilsilanisierten Polyisocyanats weist einen Festkörpergehalt von 54,8 Gew.-% auf.

### Herstellbeispiel B6 - Herstellung eines teilsilanisierten Polyisocyanats (HDI mit 70 mol-% IIIa und 30 mol-% IIa: Umsetzungscgrad c = 70 mol-% )

In einem Dreihalsglaskolben, ausgestattet mit einem Rückflußkühler und einem Thermometer, werden 57,3 Gewichtsteile trimerisiertes Hexamethylendiisocyanat (HDI) (Basonat HI 100 der Fa. BASF AG) und 69,7 Gewichtsteile Solventnaphta vorgelegt. Unter Rückflusskühlung, Stickstoffüberschleierung und Rühren wird eine Mischung aus 34,6 Gewichtsteilen N-[3-(trimethoxysilyl)propyl]-butylamin (Dynasilan ® 1189 der Fa. Degussa) (IIIa) und 21,5 Gewichtsteilen Bis-[3-(trimethoxysilyl)propyl]-amin (IIa) (Dynasilan ® 1124 der Fa. Degussa) so zudosiert, das 50 bis 60°C nicht überschritten werden. Nach Ende der Dosierung wird die Reaktionstemperatur bei 50 bis 60°C gehalten, bis der mittels Titration ermittelte Isocyanat-Massenanteil bei den theoretisch errechneten 30 mol-% liegt.
Die Lösung des teilsilanisierten Polyisocyanats weist einen Festkörpergehalt von 61,9 Gew.-% auf.

### Herstellbeispiel B7 - Herstellung eines teilsilanisierten Polyisocyanats (HDI mit 30 mol-% IIIa und 70 mol-% IIa: Umsetzungsgrad c = 70 mol-%)

In einem Dreihalsglaskolben, ausgestattet mit einem Rückflußkühler und einem Thermometer, werden 57,3 Gewichtsteile trimerisiertes Hexamethylen-diisocyanat (HDI) (Basonat HI 100 der Fa. BASF AG) und 88,0 Gewichtsteile Solventnaphta vorgelegt. Unter Rückflusskühlung, Stickstoffüberschleierung und Rühren wird eine Mischung aus 14,8 Gewichtsteilen N-[3-(trimethoxysilyl)propyl]-butylamin (Dynasilan ® 1189 der Fa. Degussa) (IIIa) und 50,2 Gewichtsteilen Bis-[3-(trimethoxysilyl)propyl]-amin (IIa) (Dynasilan ® 1124 der Fa. Degussa) so zudosiert, das 50 bis 60°C nicht überschritten werden. Nach Ende der Dosierung wird die Reaktionstemperatur bei 50 bis 60°C gehalten, bis der mittels Titration ermittelte Isocyanat-Massenanteil bei den theoretisch errechneten 70 mol-% liegt.
Die Lösung des teilsilanisierten Polyisocyanats weist einen Festkörpergehalt von 58,2 Gew.-% auf.

### Herstellung des Polyacrylatpolyols A

In einem Stahlkessel ausgestattet mit Monomerenzulauf, Initiatorzulauf, Thermometer, Ölheizung und Rückflusskühler werden 29,08 Gewichtsteile eines handelsüblichen aromatischen Lösemittelgemischs (Solventnaphtha ® der Fa. DHC Solvent Chemie GmbH) auf 140 °C aufgeheizt. Dann wird eine Mischung a1 aus 3,39 Gewichtsteilen Solventnaphtha und 2,24 Gewichtsteilen tert.-Butylperoxy-2-ethylhexanoat in einer solchen Geschwindigkeit unter Rühren zugegeben, dass die Zugabe der Mischung a1 nach 6,75 h abgeschlossen ist. 15 min nach Beginn der Zugabe der Mischung a1 wird eine Mischung a2 bestehend aus 4,97 Gewichtsteilen Styrol, 16,91 Gewichtsteilen tert.-Butylacrylat, 19,89 Gewichtsteilen 2-Hydroxypropylmethacrylat, 7,45 Gewichtsteilen n-Butylmethacrylat sowie 0,58 Gewichtsteilen Acrylsäure in einer solchen Geschwindigkeit zugegeben, dass die Zugabe der Mischung a2 nach 6 h abgeschlossen ist. Nach Zugabe der Mischung a1 wird das Reaktionsgemisch noch 2 h auf 140 °C gehalten und anschließend auf unter 100 °C abgekühlt. Anschließend wird die Reaktionsmischung noch mit einem Gemisch a3 aus 3,70 Gewichtsteilen 1-Methoxypropylacetat-2, 3,06 Gewichtsteilen Butylglykolacetat und 6,36 Gewichtsteilen Butylacetat 98/100 verdünnt.
Die erhaltene Lösung des Polyacrylatpolyols A weist einen Feststoffgehalt von 52,4% (1 h, 130 °C, Umluftofen), eine Viskosität von 3,6 dPas (ICI-Platte-Kegel-Viskosimeter, 23 °C), eine Hydroxylzahl von 155 mg KOH/g und eine Säurezahl von 10-13 mg KOH/g auf.

### Formulierung der Beschichtungsmittel

Die Beschichtungsmittel wurden folgendermaßen formuliert:

Die Komponente 1, enthaltend Komponente A (Polyol) und handelsübliche Additive und Katalysator und Lösungsmittel, wird kurz vor der Applikation mit Komponente 2, enthaltend Komponente B (modifiziertes Polyisocyanat), vereinigt und solange verrührt bis eine homogene Mischung entsteht.
Die Applikation erfolgt pneumatisch bei 2,5 bar in drei Spritzgängen. Danach wird die Beschichtung 5 Minuten bei Raumtemperatur abgelüftet und anschließend bei 140°C 22 Minuten eingebrannt.

In Tabelle 1 sind alle erfindungsgemäßen Beschichtungsmittel B1 bis B7 hinsichtlich der Anteile der Komponenten angeführt:

**Tabelle 1: Formulierung der erfindungsgemäßen Beschichtungsmittel**

| Beispiel | B1 | B2 | B3 | B4 | B5 | B6 | B7 |
|---|---|---|---|---|---|---|---|
| Komponente B | B1 | B2 | B3 | B4 | B5 | B6 | B7 |
| Gewichtsteile Poly-acrylatpolyol A gemäß Beispiel | 45,0 | 45,0 | 45,0 | 45,0 | 45,0 | 45,0 | 45,0 |
| Gewichtsteile Komponente B | 52,0 | 47,2 | 48,3 | 43,7 | 144,9 | 133,0 | 153,0 |
| Gewichtsteile Katalysator¹ (Nacure 4167, King Industries) nicht-flüchtiger Anteil 25% | 2,1 | 2,2 | 2,3 | 2,4 | 6,9 | 7,2 | 7,8 |
| Gewichtsteile BYK 301 (Verlaufsmittel, Byk Chemie) | 0,2 | 0,2 | 0,2 | 0,2 | 0,2 | 0,2 | 0,2 |
| Gewichtsteile Tinuvin 384.2 (Ciba) | 0,9 | 0,9 | 0,9 | 0,9 | 0,9 | 0,9 | 0,9 |
| Gewichtsteile Tinuvin 292 (Ciba) | 0,8 | 0,8 | 0,8 | 0,8 | 0,8 | 0,8 | 0,8 |
| Gewichtsteile Solvent-naphtha (DHC Solvent Chemie GmbH) | 20,0 | 20,0 | 20,0 | 20,0 | 20,0 | 20,0 | 20,0 |
| Äquivalentverhältnis freie Isocyanatgruppen in der Komponente B zu Hydroxylgruppen im Polyacrylatpolyol A | 1,00: 1,00 | 1,00: 1,00 | 1,00: 1,00 | 1,00: 1,00 | 1,00: 1,00 | 1,00: 1,00 | 1,00: 1,00 |
| Si Gehalt in Masse-% ²) | 1,5 | 1,8 | 2,5 | 2,9 | 3,9 | 4,5 | 5,9 |

| | | | | | | | |
|---|---|---|---|---|---|---|---|
| ¹) Katalysator auf Basis aminblockierten Phosphorsäureteilester ²) aus den eingesetzten Mengen an (IIa)/(IIIa) berechneter Si-Gehalt, bezogen auf den Feststoffgehalt der Beschichtungsmittel | | | | | | | |

Die Speichermoduli E'(200) und E'(min) sowie die Glasübergangstemperatur Tg der jeweiligen gehärteten Beschichtung werden mit der Dynamisch-Mechanischen-Thermo-Analyse (=DMTA) bei einer Heizrate von 2 K/min mit dem Gerät DMTA V der Firma Rheometrics Scientific mit einer Frequenz von 1 Hz und einer Amplitude von 0,2% gemessen. Die DMTA Messungen werden an freien Filmen mit einer Schichtdicke von 40 µm +/-10 µm durchgeführt. Hierzu wird das zu prüfende Beschichtungsmittel auf Substraten, auf denen die erhaltene Beschichtung nicht haftet, appliziert. Als Beispiele für geeignete Substrate seien Glas, Teflon, Polyethylenterephthalat und Polypropylen genannt. Die so erhaltene Beschichtung wird 20 Minuten bei einer Objekttemperatur von 140°C gehärtet und nach der Härtung 8 Tage bei 25 °C gelagert, bevor die DMTA Messungen durchgeführt werden.
Die Kratzfestigkeit der Oberflächen der resultierenden Beschichtungen wurde mit Hilfe des Crockmeter-Tests (in Anlehnung an EN ISO 105-X12 mit 10 Doppelhüben und 9N Auflagekraft unter Verwendung von 9um Schleifpapier (3M 281 Q wetordry™production™), unter anschließender Bestimmung des Restglanzes bei 20° mit einem handelsüblichen Glanzgerät), und des Hammertests (10 bzw 100 Doppelhübe mit Stahlwolle (RAKSO^{®}00(Fein)) und einem Auflagegewicht von 1 kg die mit einem Hammer durchgeführt werden. Anschließend wird wiederum der Restglanz bei 20° mit einem handelsüblichen Glanzgerät bestimmt) die Bewitterungstabilität mit Hilfe des CAM180-Tests (nach DIN EN ISO 11341 Feb 98 und DIN EN ISO 4892-2Nov00) untersucht. Die Ergebnisse sind in der Tabelle 2 aufgeführt.

**Tabelle 2: Eigenschaften der mit den erfindungsgemäßen Beschichtungsmitteln hergestellten Klarlackschichten**

| Beispiel | B1 | B2 | B3 | B4 | B5 | B6 | B7 |
|---|---|---|---|---|---|---|---|
| E'(200°C) in Pa | 2,74* 10⁷ | 3,58* 10⁷ | 3,27* 10⁷ | 6,73* 10⁷ | 5,94* 10⁷ | 1,68* 10⁸ | 2,99* 10⁸ |
| E'(min) in Pa | 2,36* 10⁷ | 3,23* 10⁷ | 2,99* 10⁷ | 5,47* 10⁷ | 5,33* 10⁷ | 1,01* 10⁸ | 1,85* 10⁸ |
| Nachvemetzungsindex PCI | 1,2 | 1,1 | 1,1 | 1,2 | 1,1 | 1,7 | 1,6 |
| Crockmeter-Test (Restglanz in %) | 41 | 53 | 58 | 63 | 75 | 88 | 95 |
| Hammertest 10 DH (Restglanz in %) | 38 | 49 | 60 | 64 | 79 | 88 | 93 |
| Hammertest 100 DH(Restglanz in %) | 0 | 1 | 18 | 28 | 65 | 81 | 92 |
| Glanz | 82 | 85 | 85 | 85 | 86 | 86 | 86 |
| CAM 180-Test (h) bis zum Auftreten von Rissen | 5500 | 5250 | 5000 | 4500 | 5250 | 5000 | 4000 |

Tabelle 2 zeigt die Eigenschaften der Beschichtungen der Beispiele B1 bis B7, hergestellt aus den erfindungsgemäßen Beschichtungsmitteln, enthaltend ein Isocyanurataddukt B hervorgehend aus der Umsetzung des HDI-Isocyanurates mit jeweils einer Mischung aus einer Komponente IIa und einer Komponente IIIa (Beispiele B2, B3, B6 und B7) im Vergleich zu Beschichtungsmitteln enthaltend ein Isocyanurataddukt B hervorgehend aus der Umsetzung mit dem HDI-Isocyanurat, nachfolgend kurz HDI, und ausschließlich einer Komponente IIa (Beispiel B4) bzw IIIa (Beispiele B1 und B5).

In allen Beispielen B1 bis B7 werden Beschichtungen mit den erfindungsgemäßen niedrigen Nachvemetzungsgraden und den entsprechenden guten Kratz-und Witterungsbeständigkeiten erhalten. Es ist zunächst festzustellen, dass die Nachvemetzung im Allgemeinen um so geringer und damit der Nachvemetzungsindex (PCI) um so kleiner ist, je geringer der Anteil der Silanvemetzung an der Vernetzung insgesamt ist. So werden bei den Beispielen B1 und B2 mit einem sehr geringen Anteil an Silanvemetzung (Umsetzungsgrad der Isocyanatgruppen des HDI von 30 mol-% und hoher Anteil an monofunktionellen Silan-Struktureinheiten von 100 mol-% Struktureinheiten III im Beispiel B1 und 70 mol-% Struktureinheiten III im Beispiel B2) niedrigere Nachvemetzungsgrade als im Beispiel 7 mit einem hohen Anteil an Silanvemetzung (Umsetzungsgrad der Isocyanatgruppen des HDI von 70 mol-% und hoher Anteil an difunktionellen Silan-Struktureinheiten von 70 mol-% Struktureinheiten II im Beispiel B7) erhalten. Gleichzeitig nimmt aber mit abnehmendem Anteil an Silanvemetzung auch die Kratzfestigkeit ab, so dass zur Erreichung sehr hoher Kratzfestigkeiten relativ hohe Anteile an Silanvemetzung erwünscht sind, wie ebenfalls durch den Vergleich der Beispiele B1 und B2 mit B7 gezeigt wird.

Bei einem Umsetzungsgrad der Isocyanatgruppen des HDI von 30 mol-% zeigt B1 (enthaltend nur Struktureinheiten III) gegenüber B4 (enthaltend nur Struktureinheiten II) eine deutlich längere Zeit im CAM180 Test bis zum Auftreten von Rissen. Entsprechend zeigt bei einem Umsetzungsgrad der Isocyanatgruppen des HDI von 70 mol-% das Beispiel B5 (enthaltend nur Struktureinheiten III) gegenüber B7 (enthaltend 70 mol-% Struktureinheiten II) eine deutlich längere Zeit im CAM180 Test bis zum Auftreten von Rissen. Invers hierzu verhält sich die Kratzfestigkeit: Bei einem Umsetzungsgrad der Isocyanatgruppen des HDI von 30 mol-% zeigt B1 (enthaltend nur Struktureinheiten III) gegenüber B4 (enthaltend nur Struktureinheiten II) eine deutlich schwächere Kratzfestigkeit in den verschiedenen Kratztests. Entsprechend zeigt bei einem Umsetzungsgrad der Isocyanatgruppen des HDI von 70 mol-% das Beispiel B5 (enthaltend nur Struktureinheiten III) gegenüber B7 (enthaltend 70 mol-% Struktureinheiten II) eine deutlich schwächere Kratzfestigkeit in den verschiedenen Kratztests. Da der relative Anteil der Struktur II somit für die Kratzfestigkeit und der Anteil der Struktur III für die Witterungsbeständigkeit verantwortlich zeigt, läßt eine sorgfältige Abstimmung der eingesetzten Mengen beider Siloxanamine IIa bzw IIIa eine Feinabstimmung zwischen Bewitterungszeit und Kratzfestigkeit zu.

Beispielhaft seien hier B1 und B4 gegenüber B2 und B3 in der Gruppe mit 30 mol-% Umsetzungsgrad der Isocyanatfunktionen gestellt. B1 erreicht hohe Werte in der Bewitterung, jedoch ist die Kratzfestigkeit mäßig. B4 hat gute Kratzfestigkeitswerte, aber ist schwächer in der Bewitterung. Beide Beispiele B2 und B3 haben gegenüber B1 bessere Kratzfestigkeiten und gegenüber B4 bessere Bewitterungszeiten.

Analoges gilt für B5 gegenüber B6 und B7 in der Gruppe mit 70 mol-% Umsetzungsgrad an Isocyanat, jedoch werden hier sowohl Kratzfestigkeit und Witterungsbeständigkeit durch den hohen relativen Anteil der Siloxanfunktionen noch stärker beeinflußt. Auch wird deutlich, dass bei einem hohen Umsetzungsgrad der Isocyanatfunktionen der relative Anteil der Struktur III die Witterungsbeständigkeit signifikant stärker beeinflusst als die Struktur II die Kratzfestigkeit wie man beim Vergleich der Werte von B6 und B7 leicht feststellt. Generell korreliert der Kratzfestigkeitswert mit dem Umsatz der Isocyanatgruppen mit den Verbindungen II und III, wobei für die Erzielung sehr hoher Kratzfestigkeiten auch ein höherer Umsatz der Isocyanatgruppen erforderlich ist.

### Vergleichsbeispiele 1 bis 7

Es wurden die Beispiele 1 bis 7 wiederholt, allerdings mit dem einzigen Unterschied, dass nun anstelle des Katalysators auf Basis aminblockierten Phosphorsäureteilester als Katalysator blockierte para-Toluolsulfonsäure eingesetzt wurde.

In Tabelle 3 sind alle Beschichtungsmittel der Vergleichsbeispiele hinsichtlich der Anteile der Komponenten angeführt:

**Tabelle 3: Formulierung der Beschichtungsmittel der Vergleichsbeispiele**

| Beispiel | VB1 | VB2 | VB3 | VB4 | VB5 | VB6 | VB7 |
|---|---|---|---|---|---|---|---|
| Komponente B | B1 | B2 | B3 | B4 | B5 | B6 | B7 |
| Gewichtsteile Poly-acrylatpolyol A gemäß Beispiel | 45,0 | 45,0 | 45,0 | 45,0 | 45,0 | 45,0 | 45,0 |
| Gewichtsteile Komponente B | 52,0 | 47,2 | 48,3 | 43,7 | 144,9 | 133,0 | 153,0 |
| Gewichtsteile Katalysator³ (Dynapol 1203, Degussa) nicht-flüchtiger Anteil 50% | 1,1 | 1,1 | 1,2 | 1,2 | 3,5 | 3,6 | 3,9 |
| Gewichtsteile BYK 301 (Verlaufsmittel, Byk Chemie) | 0,2 | 0,2 | 0,2 | 0,2 | 0,2 | 0,2 | 0,2 |
| Gewichtsteile Tinuvin 384.2 (Ciba) | 0,9 | 0,9 | 0,9 | 0,9 | 0,9 | 0,9 | 0,9 |
| Gewichtsteile Tinuvin 292 (Ciba) | 0,8 | 0,8 | 0,8 | 0,8 | 0,8 | 0,8 | 0,8 |
| Gewichtsteile Solvent-naphtha (DHC Solvent Chemie GmbH) | 20,0 | 20,0 | 20,0 | 20,0 | 20,0 | 20,0 | 20,0 |
| Äquivalentverhältnis freie Isocyanatgruppen in der Komponente B zu Hydroxylgruppen im Polyacrylatpolyol A | 1,00: 1,00 | 1,00: 1,00 | 1,00: 1,00 | 1,00: 1,00 | 1,00: 1,00 | 1,00: 1,00 | 1,00: 1,00 |
| Si Gehalt in Masse-% ⁴) | 1,5 | 1,8 | 2,5 | 2,9 | 3,9 | 4,5 | 5,9 |

| | | | | | | | |
|---|---|---|---|---|---|---|---|
| ³) Katalysator auf Basis blockierter p-Toluolsulfonsäure ⁴) aus den eingesetzten Mengen an (IIa)/(IIIa) berechneter Si-Gehalt, bezogen auf den Feststoffgehalt der Beschichtungsmittel | | | | | | | |

**Tabelle 4: Eigenschaften der mit den Beschichtungsmitteln der Vergleichsbeispiele hergestellten Kladackschichten**

| Beispiel | VB1 | VB2 | VB3 | VB4 | VB5 | VB6 | VB7 |
|---|---|---|---|---|---|---|---|
| E'(200°C) in Pa | 3,08* 10⁷ | 4,13* 10⁷ | 4,05* 10⁷ | 7,39* 10⁷ | 6,03* 10⁷ | 1,80* 10⁸ | 2,79* 10⁸ |
| E'(min) in Pa | 1,08* 10⁷ | 1,13* 10⁷ | 0,99* 10⁷ | 1,54* 10⁷ | 1,73* 10⁷ | 3,39* 10⁷ | 4,23* 10⁷ |
| Nachvemetzungsindex PCI | 2,9 | 3,6 | 4,1 | 4,8 | 3,5 | 5,3 | 6,6 |
| Crockmeter-Test (Restglanz in %) | 14 | 6 | 7 | 13 | 35 | 56 | 78 |
| Hammertest 10 DH (Restglanz in %) | 16 | 23 | 32 | 36 | 44 | 67 | 79 |
| Hammertest 100 DH(Restglanz in %) | 0 | 0 | 0 | 7 | 20 | 53 | 58 |
| Glanz | 82 | 85 | 84 | 84 | 84 | 85 | 85 |

Der Vergleich der erfindungsgemäßen Beispiele 1 bis 7 mit den Vergleichsbeispielen VB1 bis VB7 zeigt, dass die erfindungsgemäßen Beschichtungen der Beispiele B1 bis B7 eine gute Kratzfestigkeit direkt nach Endhärtung aufweisen, während die entsprechenden Beschichtungen der Vergleichsbeispiele VB1 Bis VB7 mit einem hohen Nachhernetzungsindex PCI > 2 alle nach der Endhärtung von 20 min 140°C eine signifikant schlechtere Kratzfestigkeit aufweisen. Insbesondere die Beschichtungen der Vergleichsbeispiele VB1 bis VB4 mit einem niedrigen Silanisierungsgrad müssen daher im Anschluß an die Härtung noch thermisch nachbehandelt werden, um die im Bereich der OEM Lackierung erforderliche gute Kratzfestigkeit zu erzielen, was aber sehr aufwändig und deshalb nicht praktikabel ist. Ohne diese Nachbehandlung sind die Beschichtungen aufgrund der geringen Kratzfestigkeit allenfalls bedingt handhabbar, da die Gefahr von Beschädigungen besteht. Auch die für eine Reparatur an der Linie nötige Polierbarkeit der resultierenden Beschichtungen ist für die Beschichtungen der Vergleichsbeispiele nur bedingt gegeben.

Mit zunehmendem Silangehalt zeigen die erfindungsgemäßen Beschichtungen, insbesondere der Beispiele B3 bis B7, auch einen besseren Glanz als die Beschichtungen der entsprechenden Vergleichsbeispiele.

Außerdem wird mit steigendem Silanisierungsgrad und steigendem Anteil an difunktionellen Silan (IIa), also von B1 bis B7 bzw. VB1 bis VB7 der Einfluß des Katalysators auf den Nachvemetzungsindex immer größer. Bei einem niedrigen Silanisierungsgrad mit 30 mol-% Umsetzungsgrad der Isocyanatgruppen zeigt das erfindungsgemäße Beispiel B1 unter Verwendung des hochwirksamen Katalysators auf Basis des aminblockierten Phosphorsäureteilesters einen PCI von 1,1 während das entsprechende Vergleichsbeispiel unter Verwendung der entsprechenden Menge des wesentlich schlechter wirksamen Katalysators auf Basis blockierter p-Toluolsulfonsäure einen zu hohen PCI von 2,9 aufweist. Aufgrund dieses zu hohen PCI weist die Beschichtung des Vergleichsbeispiels VB1 die bereits erwähnte völlig unzureichende Kratzfestigkeit auf. Mit zunehmendem Silangehalt in der Reihe über VB2, VB3, bis hin zu VB7 steigt der Nachvemetzungsindex PCI der Vergleichsbeispiele und damit die Nachvemetzung drastisch an und erreicht so bei einem hohen Silanisierungsgrad mit 70 mol-% Umsetzungsgrad der Isocyanatgruppen im Vergleichsbeispiel VB7 den Wert von PCI = 6,6 im Vergleich eines nur leicht gestiegenen Nachvemetzungsindexes von PCI = 1,6 im entsprechenden erfindungsgemäßen Beispiel B7. Die Nachvernetzung läuft aber unkontrollierter ab als die Härtung während der thermischen Behandlung und die Endhärte der resultierenden Beschichtungen nach erfolgter Nachvemetzung ist - falls überhaupt - nur sehr viel schwerer einzustellen. Dies führt im Allgemeinen zu wenig reproduzierbaren Eigenschaften der resultierenden Beschichtungen. Vor allem aber zeigen die Vergleichsbeispiele mit hoher bis sehr hoher Nachvemetzung wie in den Vergleichsbeispielen VB6 und VB7 eine sehr große Gefahr des Auftretens von Spannungsrissen, so dass sie für den anspruchsvollen Bereich der Automobilserienlackierung nicht geeignet sind.

## Patentansprüche

1. Beschichtungsmittel auf Basis aprotischer Lösemittel enthaltend
(a) mindestens eine hydroxylgruppenhaltige Verbindung (A),
(b) mindestens eine Verbindung (B) mit freien und/oder blockierten Isocyanatgruppen,
(c) mindestens einen Katalysator (D) für die Vernetzung von Silangruppen,
wobei
(i) ein oder mehrere Bestandteile des Beschichtungsmittels hydrolysierbare Silangruppen enthalten und
(ii) das Beschichtungsmittel zu einer Beschichtung endgehärtet werden kann, die statistisch verteilte Bereiche eines Si-O-Si Netzwerkes aufweist,
**dadurch gekennzeichnet, dass**
I. die aus dem Beschichtungsmittel erhaltene, endgehärtete Beschichtung einen Nachvernetzungsindex (PCI) kleiner als 2 aufweist, wobei
- der Nachvernetzungsindex (PCI) definiert ist als der Quotient aus dem Speichermodul E'(200) der endgehärteten Beschichtung, gemessen bei 200°C, zu dem Minimum des Speichermoduls E'(min) der endgehärteten Beschichtung, gemessen bei einer Temperatur oberhalb der gemessenen Glasübergangstemperatur Tg,
- die Speichermoduli E'(200) und E'(min) sowie die Glasübergangstemperatur Tg an freien Filmen mit einer Schichtdicke von 40 µm +/-10 µm mit der Dynamisch-Mechanischen-Thermo-Analyse (= DMTA) bei einer Heizrate von 2K pro Minute und einer Frequenz von 1 Hz gemessen worden sind und
- die DMTA Messungen an freien Filmen mit einer Schichtdicke von 40 µm +/-10 µm, die 20 Minuten bei einer Objekttemperatur von 140°C gehärtet und nach der Härtung 8 Tage bei 25 °C gelagert wurden, bevor die DMTA Messungen durchgeführt wurden
II. das Polyisocyanat (B) zumindestens teilweise eine oder mehrere, gleiche oder verschiedene Struktureinheiten der Formel (I) aufweist
-X-Si-R"ₓG₃₋ₓ (I)
mit
G = identische oder unterschiedliche hydrolysierbare Gruppen, insbesondere G = Alkoxygruppe (O R'),
X = organischer Rest, insbesondere linearer und/oder verzweigter Alkylen- oder Cycloalkylenrest mit 1 bis 20 Kohlenstoffatomen, ganz besonders bevorzugt X = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
x = 0 bis 2, bevorzugt 0 bis 1, besonders bevorzugt x = 0,
III. der Katalysator (D) phosphorhaltig ist
und
IV. das Beschichtungsmittel 0,1 bis 10 Gew.-%, bezogen auf die nicht flüchtigen Bestandteile des Beschichtungsmittels, Katalysator (D) enthält.

2. Beschichtungsmittel nach Anspruch 1, **dadurch gekennzeichnet, dass** die aus dem Beschichtungsmittel erhaltene, endgehärtete Beschichtung einen Nachvemetzungsindex (PCI) kleiner gleich 1,8, bevorzugt kleiner gleich 1,7 und ganz besonders bevorzugt kleiner gleich 1,5 aufweist.

3. Beschichtungsmittel nach Anspruch 1 oder 2, **dadurch gekennzeichnet, dass** der Katalysator (D) phosphor- und stickstoffhaltig ist.

4. Beschichtungsmittel nach einem der Ansprüche 1 bis 3, **dadurch gekennzeichnet**, der Katalysator (D) ausgewählt ist aus der Gruppe der substituierten Phosphorsäuremonoester und Phosphorsäurediester, vorzugsweise aus der Gruppe, bestehend aus acyclischen Phosphorsäurediestem und cyclischen Phosphorsäurediestern, oder der entsprechenden aminblockierten Phosphorsäureester.

5. Beschichtungsmittel nach Anspruch 4, **dadurch gekennzeichnet, dass** der Katalysator (D) mit einem tertiären Amin blockiert ist.

6. Beschichtungsmittel nach Anspruch 4 oder 5, **dadurch gekennzeichnet, dass** der Katalysator (D) ausgewählt ist aus der Gruppe aminblockierter Phosphorsäureethylhexylteilester und aminblockierter Phosphorsäurephenylteilester, insbesondere aminblockierter Phosphorsäurebis(ethylhexyl)ester.

7. Beschichtungsmittel nach einem der Ansprüche 1 bis 6, **dadurch gekennzeichnet, dass** die aus dem Beschichtungsmittel erhaltene, endgehärtete Beschichtung einen Speichermodul E'(200), gemessen bei 200°C, von weniger als 4 * 10 ⁸ Pa, bevorzugt von kleiner gleich 3 * 10 ⁸ Pa, aufweist.

8. Beschichtungsmittel nach einem der Ansprüche 1 bis 7, **dadurch gekennzeichnet, dass** das Polyisocyanat (B)
zwischen 2,5 und 97,5 mol-%, bezogen auf die Gesamtheit der Struktureinheiten (II) und (III), mindestens einer Struktureinheit der Formel (II)
-N(X-SiR"x(OR')3-x)n(X'-SiR"y(OR')3-y)m (II)
wobei
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/oder Methyl X,X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
n = 0 bis 2, m = 0 bis 2, m+n = 2 , sowie
x,y = 0 bis 2,
und
zwischen 2,5 und 97,5 mol-%, bezogen auf die Gesamtheit der Struktureinheiten (II) und (III), mindestens einer Struktureinheit der Formel (III)
-Z-(X-SiR"x(OR')3-x) (III),
wobei
Z = -NH-, -NR-,-O-, mit
R = Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl ,
x=0 bis 2, und
X, R', R" die bei Formel (II) angegebene Bedeutung haben,
aufweist.

9. Beschichtungsmittel nach Anspruch 8, **dadurch gekennzeichnet, dass** das Polyisocyanat zwischen 5 und 95 mol-%, insbesondere zwischen 10 und 90 mol-%, besonders bevorzugt zwischen 20 und 80 mol-%, und ganz besonders zwischen 30 und 70 mol-%, jeweils bezogen auf die Gesamtheit der Struktureinheiten (II) und (III), mindestens einer Struktureinheit der Formel (II) und zwischen 5 und 95 mol-%, insbesondere zwischen 10 und 90 mol-%, besonders bevorzugt zwischen 20 und 80 mol-%, und ganz besonders zwischen 30 und 70 mol-%, jeweils bezogen auf die Gesamtheit der Struktureinheiten (II) und (III), mindestens einer Struktureinheit der Formel (III), aufweist.

10. Beschichtungsmittel nach Anspruch 8 oder 9, **dadurch gekennzeichnet, dass** die Strukturelemente (II) und (III) in Anteilen von 2,5 bis 97,5 mol-%, bevorzugt von 5 bis 95 mol-%, besonders bevorzugt zwischen 10 und 90 mol-%, jeweils bezogen auf die Summe der für die Vernetzung im Beschichtungsmittel maßgeblichen funktionellen Gruppen, gebildet aus den Anteilen der Hydroxyl- und Isocyanatgruppen sowie den Anteilen der Strukturelemente (II) und (III), vorhanden sind.

11. Beschichtungsmittel nach einem der Ansprüche 8 bis 10, **dadurch gekennzeichnet, dass** im Polyisocyanat (B)
zwischen 2,5 und 90 mol-%, der Isocyanatgruppen im Polyisocyanatgrundkörper zu Struktureinheiten (II) und
zwischen 2,5 und 90 mol-%, der Isocyanatgruppen im Polyisocyanatgrundkörper zu Struktureinheiten (III)
umgesetzt sind und/oder der Gesamtanteil der zu den Struktureinheiten (II) und/oder (III) umgesetzten Isocyanatgruppen im Polyisocyanatgrundkörper zwischen 5 und 95 mol-% liegt.

12. Beschichtungsmittel nach Anspruch 11, **dadurch gekennzeichnet, dass** der Polyisocyanatgrundkörper ausgewählt ist aus der Gruppe 1,6-Hexamethylendiisocyanat, Isophorondiisocyanat, und 4,4'-Methylendicyclohexyldiisocyanat, der Biuret-Dimeren der vorgenannten Polyisocyanate und/oder der Isocyanurat-Trimeren der vorgenannten Polyisocyanate.

13. Beschichtungsmittel nach einem der Ansprüche 1 bis 12, **dadurch gekennzeichnet, dass** das Polyol (A) mindestens ein Poly(meth)-acrylatpolyol enthält.

14. Mehrstufiges Beschichtungsverfahren, **dadurch gekennzeichnet, dass** auf ein gegebenenfalls vorbeschichtetes Substrat eine pigmentierte Basislackschicht und danach eine Schicht aus dem Beschichtungsmittel nach einem der Ansprüche 1 bis 13 aufgetragen wird.

15. Mehrstufiges Beschichtungsverfahren nach Anspruch 14, **dadurch gekennzeichnet, dass** nach dem Auftrag der pigmentierten Basislackschicht der aufgebrachte Basislack zunächst bei Temperaturen von Raumtemperatur bis 80°C getrocknet wird und nach dem Auftrag des Beschichtungsmittels nach einem der Ansprüche 1 bis 14 bei Temperaturen von 30 bis 200°C während einer Zeit von 1 min bis zu 10 h gehärtet wird.

16. Anwendung des Verfahrens nach Anspruch 14 oder 15 für die Automobilserienlackierung und die Automobilreparaturtackierung.

17. Verwendung der Beschichtungsmittel nach einem der Ansprüche 1 bis 13 als Klarlack für die Automobilserienlackierung und die Automobilreparaturlackierung.

18. Verwendung der Beschichtungsmittel nach einem der Ansprüche 1 bis 13 als transparenter Klarlack für die Beschichtung transparenter Kunststoffsubstrate.

## Claims

1. Coating composition based on aprotic solvents comprising
(a) at least one hydroxyl-containing compound (A),
(b) at least one compound (B) having free and/or blocked isocyanate groups,
(c) at least one catalyst (D) for the crosslinking of silane groups, where
(i) one or more constituents of the coating composition contain hydrolyzable silane groups and
(ii) the coating composition can be finally cured to a coating which has statistically distributed regions of an Si-O-Si network,
**characterized in that**
I. the finally cured coating obtained from the coating composition has a post-crosslinking index (PCI) of less than 2, where
- the post-crosslinking index (PCI) is defined as the ratio of the storage modulus E'(200) of the finally cured coating, measured at 200°C, to the minimum of the storage modulus E'(min) of the finally cured coating, measured at a temperature above the measured glass transition temperature Tg,
- the storage moduli E'(200) and E'(min) and also the glass transition temperature Tg having been measured on free films with a thickness of 40 µm +/-10 µm by dynamic-mechanical thermo-analysis (DMTA) at a heating rate of 2 K per minute and at a frequency of 1 Hz, and
- the DMTA measurements on free films with a thickness of 40 µm +/-10 µm which have been cured for 20 minutes at an article temperature of 140°C and stored at 25°C for 8 days after curing were carried out before the DMTA measurements,
II. the polyisocyanate (B) contains at least partly one or more identical or different structural units of the formula (I)
-X-Si-R"ₓG₃-ₓ (I)
where
G = identical or different hydrolyzable groups,
more particularly G = alkoxy group (OR'),
X = organic radical, more particularly linear and/or branched alkylene or cycloalkylene radical having 1 to 20 carbon atoms, very preferably X = alkylene radical having 1 to 4 carbon atoms, R" = alkyl, cycloalkyl, aryl or aralkyl, it being possible for the carbon chain to be interrupted by nonadjacent oxygen, sulfur or NRa groups, with Ra = alkyl, cycloalkyl, aryl or aralkyl, preferably R" = alkyl radical, more particularly having 1 to 6 C atoms, x = 0 to 2, preferably 0 to 1, more preferably x = 0
III. the catalyst (D) is phosphorus-containing and
IV. the coating composition contains from 0.1 to 10% by weight of catalyst (D), based on the nonvolatile constituents of the coating composition.

2. Coating composition according to Claim 1, **characterized in that** the finally cured coating obtained from the coating composition has a post-crosslinking index (PCI) of less than or equal to 1.8, preferably less than or equal to 1.7, and very preferably less than or equal to 1.5.

3. Coating composition according to Claim 1 or 2, **characterized in that** the catalyst (D) is phosphorus- and nitrogen-containing.

4. Coating composition according to any one of Claims 1 to 3, **characterized in that** the catalyst (D) is selected from the group of substituted phosphoric monoesters and phosphoric diesters, preferably from the group consisting of acyclic phosphoric diesters and cyclic phosphoric diesters, or the corresponding amine-blocked phosphoric esters.

5. Coating composition according to claim 4, **characterized in that** the catalyst (D) is blocked with a tertiary amine.

6. Coating composition according to Claim 4 or 5, **characterized in that** the catalyst (D) is selected from the group of amine-blocked phosphoric acid ethylhexyl partial esters and amine-blocked phosphoric acid phenyl partial esters, more particularly amine-blocked bis(ethylhexyl) phosphate.

7. Coating composition according to any one of Claims 1 to 6, **characterized in that** the finally cured coating obtained from the coating composition has a storage modulus E'(200), measured at 200°C, of less than 4*10⁸ Pa, preferably of less than or equal to 3*10⁸ Pa.

8. Coating composition according to any one of Claims 1 to 7, **characterized in that** the polyisocyanate (B) comprises
between 2.5 and 97.5 mol%, based on the entirety of structural units (II) and (III), of at least one structural unit of the formula (II)
-N(X-SiR"x(OR')3-x)n(X'-SiR"y(OR')3-y)m (II)
where
R' = hydrogen, alkyl or cycloalkyl, it being possible for the carbon chain to be interrupted by nonadjacent oxygen, sulfur or NRa groups, with Ra = alkyl, cycloalkyl, aryl or aralkyl, preferably R' = ethyl and/or methyl
X,X' = linear and/or branched alkylene or cycloalkylene radical having 1 to 20 carbon atoms, preferably X, X' = alkylene radical having 1 to 4 carbon atoms
R" = alkyl, cycloalkyl, aryl or aralkyl, it being possible for the carbon chain to be interrupted by nonadjacent oxygen, sulfur or NRa groups, with Ra = alkyl, cycloalkyl, aryl or aralkyl, preferably R" = alkyl radical, in particular having 1 to 6 carbon atoms, n=Oto2,m=Oto2,m+n=2,and
x,y = 0 to 2,
and
between 2.5 and 97.5 mol%, based on the entirety of structural units (II) and (III), of at least one structural unit of the formula (III)
-Z-(X-SiR"x(OR')3-x) (III),
where
Z = -NH-, -NR-, -O-, with
R = alkyl, cycloalkyl, aryl or aralkyl, it being possible for the carbon chain to be interrupted by nonadjacent oxygen, sulfur or NRa groups, with Ra = alkyl, cycloalkyl, aryl or aralkyl,
x = 0 to 2, and
X, R', R" have the meaning given in formula (II).

9. Coating composition according to Claim 8, **characterized in that** the polyisocyanate contains between 5 and 95 mol%, more particularly between 10 and 90 mol%, more preferably between 20 and 80 mol%, and especially between 30 and 70 mol%, based in each case on the entirety of the structural units (II) and (III), of at least one structural unit of the formula (II), and between 5 and 95 mol%, more particularly between 10 and 90 mol%, more preferably between 20 and 80 mol%, and especially between 30 and 70 mol%, based in each case on the entirety of the structural units (II) and (III), of at least one structural unit of the formula (III).

10. Coating composition according to Claim 8 or 9, **characterized in that** the structural elements (II) and (III) are present in fractions of 2.5 to 97.5 mol%, preferably of 5 to 95 mol%, more preferably between 10 and 90 mol%, in each case based on the sum of the functional groups critical for crosslinking in the coating composition, formed from the fractions of the hydroxyl and isocyanate groups and from the fractions of the structural elements (II) and (III).

11. Coating composition according to any one of Claims 8 to 10, **characterized in that**, in the polyisocyanate (B), between 2.5 and 90 mol% of the isocyanate groups in the core polyisocyanate structure have undergone reaction to structural units (II) and between 2.5 and 90 mol% of the isocyanate groups in the core polyisocyanate structure have undergone reaction to structural units (III) and/or the total fraction of the isocyanate groups in the core polyisocyanate structure that have undergone reaction to structural units (II) and/or (III) is between 5 and 95 mol%.

12. Coating composition according to Claim 11, **characterized in that** the core polyisocyanate structure is selected from the group of 1,6-hexamethylene diisocyanate, isophorone diisocyanate, and 4,4'-methylenedicyclohexyl diisocyanate, the biuret dimers of the aforementioned polyisocyanates and/or the isocyanurate trimers of the aforementioned polyisocyanates.

13. Coating composition according to any one of Claims 1 to 12, **characterized in that** the polyol (A) comprises at least one poly(meth)acrylate polyol.

14. Multistage coating method, **characterized in that** a pigmented basecoat film is applied to an uncoated or precoated substrate and thereafter a film of the coating composition according to any one of Claims 1 to 13 is applied.

15. Multistage coating method according to Claim 14, **characterized in that**, following the application of the pigmented basecoat film, the applied basecoat material is first dried at temperatures from room temperature to 80°C and, following the application of the coating composition according to any one of Claims 1 to 14, the system is cured at temperatures from 30 to 200°C for a time of 1 min up to 10 h.

16. Application of the method according to Claim 14 or 15 for automotive OEM finishing and automotive refinish.

17. Use of the coating compositions according to any one of Claims 1 to 13 as a clearcoat material for automotive OEM finishing and automotive refinish.

18. Use of the coating compositions according to any one of Claims 1 to 13 as a transparent clearcoat material for coating transparent plastics substrates.

## Revendications

1. Agent de revêtement à base de solvants aprotiques, contenant
(a) au moins un composé (A) contenant des groupes hydroxyle,
(b) au moins un composé (B) présentant des groupes isocyanate libres et/ou bloqués,
(c) au moins un catalyseur (D) pour la réticulation de groupes silane,
(i) un ou plusieurs constituants de l'agent de revêtement contenant des groupes silane hydrolysables et
(ii) l'agent de revêtement pouvant être durci en finalité en un revêtement qui présente des zones réparties statistiquement d'un réseau Si-O-Si,
**caractérisé en ce que**
I. le revêtement obtenu à partir de l'agent de revêtement, durci en finalité, présente un indice de post-réticulation (PCI) inférieur à 2
- l'indice de post-réticulation étant défini comme le quotient du module d'accumulation E'(200) du revêtement durci en finalité, mesuré à 200°C, au minimum du module d'accumulation E'(min) du revêtement durci en finalité, mesuré à une température supérieure à la température de transition vitreuse Tg mesurée,
- les modules d'accumulation E'(200) et E'(min) ainsi que la température de transition vitreuse Tg ayant été mesurées sur des films libres présentant une épaisseur de couche de 40 µm +/- 10 µm à l'aide de l'analyse thermomécanique dynamique (= DMTA) à une vitesse de chauffage de 2K par minute et une fréquence de 1 Hz et
- les mesures de MDTA étant réalisées sur des films libres présentant une épaisseur de couche de 40 µm +/-10 µm, qui ont été durcis pendant 20 minutes à une température de l'objet de 140°C et entreposés après le durcissement pendant 8 jours à 25°C, avant de réaliser les mesures de DMTA,
II. le polyisocyanate (B) présente au moins en partie une ou plusieurs unités de structure identiques ou différentes de formule (I)
-X-Si-R"ₓG₃₋ₓ (I)
où
G = des groupes hydrolysables identiques ou différents, en particulier G = un groupe alcoxy (OR'),
X = un radical organique, en particulier un radical alkylène linéaire et/ou ramifié ou cycloalkylène, comprenant 1 à 20 atomes de carbone, de manière tout particulièrement préférée X = un radical alkylène comprenant 1 à 4 atomes de carbone,
R" = alkyle, cycloalkyle, aryle ou aralkyle, la chaîne carbonée pouvant être interrompue par des groupes oxygène, soufre ou NRa non adjacents, avec Ra = alkyle, cycloalkyle, aryle ou aralkyle, de préférence R" = un radical alkyle, comprenant en particulier 1 à 6 atomes de carbone,
x = 0 à 2, de préférence 0 à 1, de manière particulièrement préférée x = 0,
III. le catalyseur (D) contient du phosphore et
IV. le revêtement contient 0,1 à 10% en poids, par rapport aux constituants non volatils de l'agent de revêtement, de catalyseur (D).

2. Agent de revêtement selon la revendication 1, **caractérisé en ce que** le revêtement obtenu à partir de l'agent de revêtement, durci en finalité, présente un indice de post-réticulation (PCI) inférieur à 1,8, de préférence inférieur à 1,7 et de manière tout particulièrement préférée inférieur à 1,5.

3. Agent de revêtement selon la revendication 1 ou 2, **caractérisé en ce que** le catalyseur (D) contient du phosphore et de l'azote.

4. Agent de revêtement selon l'une quelconque des revendications 1 à 3, **caractérisé en ce que** le catalyseur (D) est choisi dans le groupe formé par les monoesters et les diesters substitués de l'acide phosphorique, de préférence dans le groupe constitué par les diesters acycliques et cycliques de l'acide phosphorique ou les esters de l'acide phosphorique bloqués par amine correspondants.

5. Agent de revêtement selon la revendication 4, **caractérisé en ce que** le catalyseur (D) est bloqué par une amine tertiaire.

6. Agent de revêtement selon la revendication 4 à 5, **caractérisé en ce que** le catalyseur (D) est choisi dans le groupe des esters éthylhexyliques partiels de l'acide phosphorique bloqués par amine et des esters phényliques partiels de l'acide phosphorique bloqués par amine, en particulier des esters bis(éthylhexyliques) de l'acide phosphorique bloqués par amine.

7. Agent de revêtement selon l'une quelconque des revendications 1 à 6, **caractérisé en ce que** le revêtement obtenu à partir de l'agent de revêtement, durci en finalité présente un module d'accumulation E'(200), mesuré à 200°C, inférieur à 4*10⁸ Pa, de préférence inférieur à 3*10⁸ Pa.

8. Agent de revêtement selon l'une quelconque des revendications 1 à 7, **caractérisé en ce que** le polyisocyanate (B) présente
entre 2,5 et 97,5% en mole, par rapport à la totalité des unités de structure (II) et (III), d'au moins une unité de structure de formule (II)
-N(X-SiR"ₓ(OR')₃₋ₓ)ₙ(X'-SiR"_{y}(OR')_{3-y})ₘ (II)
où
R' = hydrogène, alkyle ou cycloalkyle, la chaîne carbonée pouvant être interrompue par des groupes oxygène, soufre ou NRa non adjacents, avec Ra = alkyle, cycloalkyle, aryle ou aralkyle, de préférence R' = éthyle et/ou méthyle,
X, X' = un radical alkylène linéaire et/ou ramifié ou cycloalkylène, comprenant 1 à 20 atomes de carbone, de préférence X, X' = un radical alkylène comprenant 1 à 4 atomes de carbone,
R" = alkyle, cycloalkyle, aryle ou aralkyle, la chaîne carbonée pouvant être interrompue par des groupes oxygène, soufre ou NRa non adjacents, avec Ra = alkyle, cycloalkyle, aryle ou aralkyle, de préférence R" = un radical alkyle, comprenant en particulier 1 à 6 atomes de carbone,
n = 0 à 2, m = 0 à 2, m+n = 2, et
x, y = 0 à 2,
et
entre 2,5 et 97,5% en mole, par rapport à la totalité des unités de structure (II) et (III), d'au moins une unité de structure de formule (III)
-Z-(X-SiR"ₓ(OR')₃₋ₓ) (III),
où
Z =-NH-, -NR-, -O-, avec
R = alkyle, cycloalkyle, aryle ou aralkyle, la chaîne carbonée pouvant être interrompue par des groupes oxygène, soufre ou NRa non adjacents, avec Ra = alkyle, cycloalkyle, aryle ou aralkyle,
x = 0 à 2, et
X, R', R" ont la signification indiquée pour la formule (II).

9. Agent de revêtement selon la revendication 8, **caractérisé en ce que** le polyisocyanate présente entre 5 et 95% en mole, en particulier entre 10 et 90% en mole, de manière particulièrement préférée entre 20 et 80% en mole et de manière tout particulièrement préférée entre 30 et 70% en mole, à chaque fois par rapport à la totalité des unités de structure (II) et (III), d'au moins une unité de structure de formule (II) et entre 5 et 95% en mole, en particulier entre 10 et 90% en mole, de manière particulièrement préférée entre 20 et 80% en mole et de manière tout particulièrement préférée entre 30 et 70% en mole, à chaque fois par rapport à la totalité des unités de structure (II) et (III), d'au moins une unité de structure de formule (III).

10. Agent de revêtement selon la revendication 8 ou 9, **caractérisé en ce que** les éléments de structure (II) et (III) sont présents en des proportions de 2,5 à 97,5% en mole, de préférence de 5 à 95% en mole, de manière particulièrement préférée entre 10 et 90% en poids, à chaque fois par rapport à la somme des groupes fonctionnels déterminants pour la réticulation dans l'agent de revêtement, formée par les proportions de groupes hydroxyle et isocyanate ainsi que par les proportions des éléments de structure (II) et (III).

11. Agent de revêtement selon l'une quelconque des revendications 8 à 10, **caractérisé en ce que** dans le polyisocyanate (B) entre 2,5 et 90% en mole des groupes isocyanate dans le corps de base polyisocyanate sont transformés en unités de structure (II) et
entre 2,5 et 90% en mole des groupes isocyanate dans le corps de base polyisocyanate sont transformés en unités de structure (III)
et/ou la proportion totale des groupes isocyanate transformés en unités de structure (II) et/ou (III) dans le corps de base polyisocyanate se situe entre 5 et 95% en mole.

12. Agent de revêtement selon la revendication 11, **caractérisé en ce que** le corps de base polyisocyanate est choisi dans le groupe formé par le 1,6-hexaméthylènediisocyanate, l'isophoronediisocyanate et le 4,4'-méthylènedicyclohexyldiisocyanate, les dimères de biuret des polyisocyanates susmentionnés et/ou les trimères d'isocyanurate des polyisocyanates susmentionnés.

13. Agent de revêtement selon l'une quelconque des revendications 1 à 12, **caractérisé en ce que** le polyol (A) contient au moins un poly(méth)acrylatepolyol.

14. Procédé de revêtement à plusieurs étapes, **caractérisé en ce qu'**on applique, sur un substrat le cas échéant revêtu au préalable, une laque de base pigmentée, puis une couche de l'agent de revêtement selon l'une quelconque des revendications 1 à 13.

15. Procédé de revêtement en plusieurs étapes selon la revendication 14, **caractérisé en ce qu'**après l'application de la couche de laque de base pigmentée, on sèche d'abord la couche de laque de base appliquée à des températures allant de la température ambiante à 80°C, et après l'application de l'agent de revêtement selon l'une quelconque des revendications 1 à 14, on durcit à des températures de 30 à 200°C pendant un laps de temps de 1 min à 10 h.

16. Utilisation du procédé selon la revendication 14 ou 15 pour le laquage en série et le laquage de réparation de voitures.

17. Utilisation de l'agent de revêtement selon l'une quelconque des revendications 1 à 13 comme laque claire pour le laquage en série et le laquage de réparation de voitures.

18. Utilisation de l'agent de revêtement selon l'une quelconque des revendications 1 à 13 comme laque claire transparente pour le revêtement de substrats transparents en matériau synthétique.
